# EUROPEAN PATENT SPECIFICATION

(11) **EP 3 738 393 B1**
(45) Date of publication and mention of the grant of the patent: **29.09.2021**
(21) Application number: 19700763.6
(22) Date of filing: 04.01.2019
(51) Int. Cl.: H04W 76/15, H04W 76/12, H04L 1/08

(54) **PDCP DUPLICATION CONFIGURATION OVER E1**
PDCP-DUPLIZIERUNGSKONFIGURATION ÜBER E1
CONFIGURATION DE DUPLICATION PDCP SUR E1

(30) Priority: 09.01.2018 US 201862615078 P
(43) Date of publication of application: 18.11.2020
(73) Proprietor: TELEFONAKTIEBOLAGET LM ERICSSON (PUBL), 164 83 Stockholm (SE)
(72) Inventor: CENTONZA, Angelo, 112 44 Stockholm (SE); FIORANI, Matteo, 171 52 Solna (SE)
(74) Representative: Ericsson
(86) International application number: PCT/SE2019/050003
(87) International publication number: WO 2019/139530

(56) References cited:
- "3rd Generation Partnership Project; Technical Specification Group Radio Access Network; Study of separation of NR Control Plane (CP) and User Plane (UP) for split option 2; (Release 15)", 3GPP DRAFT; TR 38.806 V100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 December 2017 (2017-12-17), XP051365407, Retrieved from the Internet: URL:http://www.3gpp.org/ftp/Meetings%5F3GP P%5FSYNC/RAN/Docs/ [retrieved on 2017-12-17]
- INTEL CORPORATION: "General principles of separation of CP and UP for high level functional split", 3GPP DRAFT; R3-172285-SEPARATION OF CP AND UP FOR HIGH LEVEL FUNCTIONAL SPLIT_V4, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. RAN WG3, no. Qingdao, China; 20170626 - 20170628 26 June 2017 (2017-06-26), XP051302232, Retrieved from the Internet: URL:http://www.3gpp.org/ftp/Meetings_3GPP_ SYNC/RAN3/Docs/ [retrieved on 2017-06-26]
- CATT: "Discussion on CA based PDCP Duplication", 3GPP DRAFT; R3-174533, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, NV, USA; 20171127 - 20171201 17 November 2017 (2017-11-17), XP051373144, Retrieved from the Internet: URL:http://www.3gpp.org/ftp/tsg%5Fran/WG3% 5FIu/TSGR3%5F98/Docs/ [retrieved on 2017-11-17]

## Description

This application claims priority to Provisional U.S. Patent Application 62/615,078 filed 9 January 2018.

### TECHNICAL FIELD

The solution presented herein relates generally to wireless communication systems, and more particularly to the duplication of packets for a network node comprising a CU-CP, and CU-UP, and at least one DU.

### BACKGROUND

5G Radio Access Network (RAN) architecture, also referred to as the Next Gen (NG) architecture, is one of the latest standards for wireless communications. A network node in 5G generally includes a Central Unit Control Plane (CU-CP), multiple CU User Planes (CU-Ups), and multiple Distributed Units (DUs). The CU-CP connects to each DU via a control plane interface, e.g., F1-C, the CU-UP(s) connect to each DU via a user plane interface, e.g., F1-U, and the CU-CP connects to each CU-UP via an E1 interface. The E1 interface is divided in Radio Network Layer (RNL) and Transport Network Layer (TNL). The RNL includes the E1 application protocol (E1AP). The TNL is based on Internet Protocol (IP) transport, comprising the Stream Control Transmission Protocol (SCTP) on top of IP. The application layer signaling protocol is referred to as E1AP (E1 Application Protocol).

3GPP RAN WG2 has introduced a new feature for increasing reliability and reducing latency, namely Packet Data Convergence Protocol (PDCP) packet duplication. PDCP packet duplication is described in TS38.300. In general, when duplication is configured for a radio bearer by RRC, an additional Radio Link Control (RLC) entity and an additional logical channel are added to the radio bearer to handle the duplicated PDCP Packet Data Units (PDUs). Duplication at PDCP therefore includes sending the same PDCP PDUs twice: once on the original RLC entity and a second time on the additional RLC entity. With two independent transmission paths, packet duplication therefore increases reliability and reduces latency and is especially beneficial for Ultra Reliable Low Latency Class (URLLC) services. That is because the same packet is sent via two radio links with different radio conditions. Hence if one radio link is blocked or unable to deliver the packet the other radio link would send the packet. Also, the packet will be sent by the link with the fastest scheduling.

When duplication occurs, the original PDCP PDU and the corresponding duplicate are not transmitted on the same carrier. The two different logical channels can either belong to the same MAC entity (Carrier Aggregation (CA)) or to different ones (Dual Connectivity (DC)). In the CA case, logical channel mapping restrictions are used in MAC to ensure that the logical channel carrying the original PDCP PDUs and logical channel carrying the corresponding duplicates are not sent on the same carrier.

There currently exist certain challenge(s). In an architecture that relies on the separation of CU-CP and CU-UP, where the CU-CP decides if/when to configure the PDCP packet duplication feature for each data radio bearer (DRB). However, because the PDCP-U protocol resides in the CU-UP, the actual packet duplication is performed by the CU-UP. Therefore, a mechanism is needed to configure CU-UP to enable PDCP packet duplication for each DRB.

The document "3rd Generation Partnership Project; Technical Specification Group Radio Access Network; Study of separation of NR Control Plane (CP) and User Plane (UP) for split option 2; (Release 15)", 17 December 2017 (2017-12-17) discloses a study of the necessary protocol functions down to the procedure and message level related to the possible identified solutions e.g. a standardised control plane interface to enable set-up, modification, and release of the DRB related resources in the CU-UP, including handling of security keys in the CU-UP for RAN security activation and configuration.

### SUMMARY

The solution presented herein provides a mechanism for enabling PDCP packet duplication for each DRB by the CU-UP as defined by the appended claims.

### BRIEF DESCRIPTION OF THE DRAWINGS

Figure 1 shows an exemplary 5G RAN architecture.
Figure 2 shows an exemplary RAN architecture with CU-CP and CU-UP separation.
Figure 3 shows an exemplary PDCP packet duplication configuration for CA.
Figure 4 shows an exemplary PDCP packet duplication for dual connectivity.
Figure 5 shows an exemplary separate activation/deactivation.
Figure 6 shows a method not forming part of the invention.
Figure 7 shows a method according to exemplary embodiments.
Figure 8 shows a method according to exemplary embodiments.
Figure 9 shows a method according to exemplary embodiments.
Figure 10 shows a block diagram of a network node according to exemplary embodiments.
Figure 11 shows a block diagram of a network node according to exemplary embodiments.
Figure 12 shows an exemplary wireless network applicable to the solution presented herein.
Figure 13 shows an exemplary UE applicable to the solution presented herein.
Figure 14 shows an exemplary virtualization environment applicable to the solution presented herein.
Figure 15 shows an exemplary telecommunications network applicable to the solution presented herein.
Figure 16 shows an exemplary host computer applicable to the solution presented herein.
Figure 17 shows an exemplary method implemented in a communication system in accordance with embodiments of the solution presented herein.
Figure 18 shows another exemplary method implemented in a communication system in accordance with embodiments of the solution presented herein.
Figure 19 shows another exemplary method implemented in a communication system in accordance with embodiments of the solution presented herein.
Figure 20 shows another exemplary method implemented in a communication system in accordance with embodiments of the solution presented herein.

### DETAILED DESCRIPTION

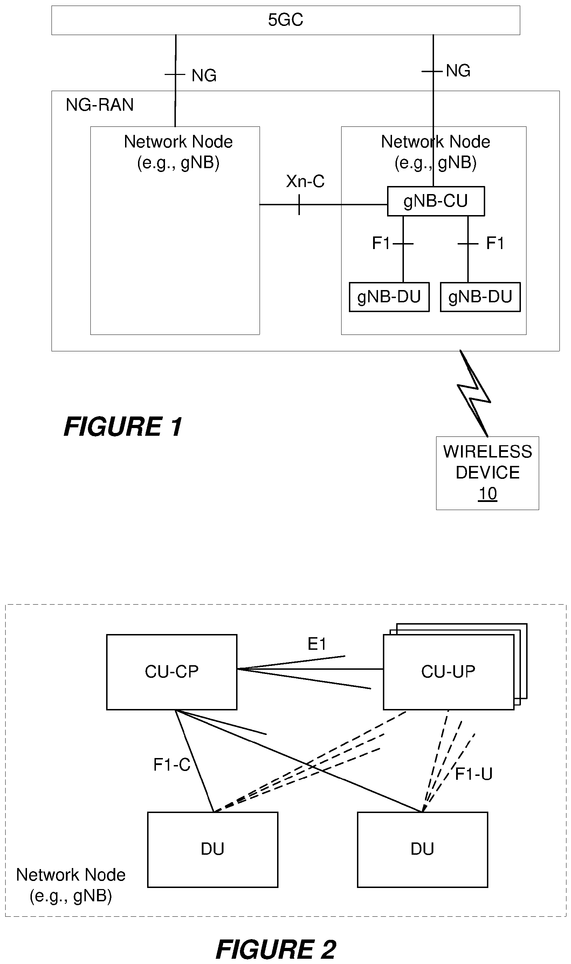

Figure 1 shows an exemplary 5G Radio Access Network (RAN) architecture. The Next Gen (NG) architecture can be further described as follows:
- The NG-RAN includes of a set of gNBs connected to the 5G Core (5GC) through the NG interface.
- An NG NodeB (gNB) can support Frequency Division Duplex (FDD) mode, Time Division Duplex (TDD) mode, or dual mode operation.
- gNBs can be interconnected through the Xn interface.
- A gNB may include a gNB Central Unit (gNB-CU) and gNB Distribution Units (gNB-DUs).
- A gNB-CU and a gNB-DU are connected via F1 logical interface.
- One gNB-DU is connected to only one gNB-CU.

NG, Xn, and F1 are logical interfaces. For NG-RAN, the NG and Xn-C interfaces for a gNB comprising of a gNB-CU and gNB-DUs, terminate in the gNB-CU. For E-UTRAN New radio Dual Connectivity (EN-DC), the S1-U and X2-C interfaces for a gNB comprising of a gNB-CU and gNB-DUs, terminate in the gNB-CU. The gNB-CU and connected gNB-DUs are only visible to other gNBs and the 5GC as a gNB.

The NG-RAN is layered into a Radio Network Layer (RNL) and a Transport Network Layer (TNL). The NG-RAN architecture, i.e., the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In NG-Flex configuration, each gNB is connected to all Access and Mobility Management Functions (AMFs) within an AMF Region. The AMF Region is defined in 3GPP TS 23.501.

The general principles for the specification of the F1 interface are as follows:
- the F1 interface is be open;
- the F1 interface supports the exchange of signaling information between the endpoints, in addition the interface supports data transmission to the respective endpoints;
- from a logical standpoint, the F1 is a point-to-point interface between the endpoints (a point-to-point logical interface should be feasible even in the absence of a physical direct connection between the endpoints);
- the F1 interface supports control plane and user plane separation;
- the F1 interface separates Radio Network Layer (RNL) and Transport Network Layer (TNL);
- the F1 interface enable exchanges of User Equipment (UE) associated information and non-UE associated information;
- the F1 interface is defined to be future proof to fulfil different new requirements, support new services and new functions;
- one gNB-CU and set of gNB-DUs are visible to other logical nodes as a gNB. The gNB terminates X2, Xn, NG and S1-U interfaces;
- the CU may be separated in control plane (CP) and user plane (UP).
3GPP RAN WG3 has also stared working on a new open interface between the control plane (CU-CP) and the user plane (CU-UP) parts of the CU. The related agreements are collected in TR 38.806 and reported in the following. The open interface between CU-CP and CU-UP is named E1. Figure 2 shows the overall RAN architecture with CU-CP and CU-UP separation.

The CU-CP hosts the Radio Resource Control (RRC) and the control part of the Packet Data Convergence Protocol (PDCP -C). The CU-UP hosts the Service Data Adaptation Protocol (SDAP) (if present) and the user plane part of the PDCP (PDCP-U). The architecture in Figure 2 is described as follows:
- A gNB may include a CU-CP, multiple CU-UPs and multiple DUs;
- The CU-CP is connected to the DU through the F1-C interface;
- The CU-UP is connected to the DU through the F1-U interface;
- The CU-UP is connected to the CU-CP through the E1 interface;
- One DU is connected to only one CU-CP;
- One CU-UP is connected to only one CU-CP;
- For resiliency, a DU and/or a CU-UP may be connected to multiple CU-CPs by appropriate implementation.
- One DU can be connected to multiple CU-UPs under the control of the same CU-CP;
- One CU-UP can be connected to multiple DUs under the control of the same CU-CP;
- The connectivity between a CU-UP and a DU is established by the CU-CP using e.g., Bearer or UE Context Management functions.
- The CU-CP selects the appropriate CU-UP(s) for the requested services for the UE.
- Data forwarding between CU-UPs should be defined (e.g., reuse Xn-U, E1-U) during the normative work.

The E1 interface is divided in Radio Network Layer (RNL) and Transport Network Layer (TNL). The RNL includes the E1 application protocol (E1AP). The TNL is based on IP transport, comprising the Stream Control Transmission Protocol (SCTP) on top of IP. The application layer signaling protocol is referred to as E1AP (E1 Application Protocol).

3GPP RAN WG2 has introduced a new feature for increasing reliability and reducing latency, namely PDCP packet duplication. The PDCP packet duplication is described in TS 38.300 as follows.

When duplication is configured for a radio bearer by RRC, an additional Radio Link Control (RLC) entity and an additional logical channel are added to the radio bearer to handle the duplicated PDCP Packet Data Units (PDUs). Duplication at PDCP therefore includes sending the same PDCP PDUs twice: once on the original RLC entity and a second time on the additional RLC entity. With two independent transmission paths, packet duplication therefore increases reliability and reduces latency and is especially beneficial for Ultra Reliable Low Latency Class (URLLC) services. That is because the same packet is sent via two radio links with different radio conditions. Hence if one radio link is blocked or unable to deliver the packet the other radio link would send the packet. Also, the packet will be sent by the link with the fastest scheduling.

When duplication occurs, the original PDCP PDU and the corresponding duplicate are not transmitted on the same carrier. The two different logical channels can either belong to the same MAC entity (Carrier Aggregation (CA)) or to different ones (Dual Connectivity (DC)). In the CA case, logical channel mapping restrictions are used in MAC to ensure that the logical channel carrying the original PDCP PDUs and logical channel carrying the corresponding duplicates are not sent on the same carrier.

Once configured, duplication can be activated and de-activated per data radio bearer (DRB) by means of a Medium Access Control (MAC) control element (CE):
- In CA, when duplication is de-activated, the logical channel mapping restrictions are lifted;
- In DC, the UE applies the MAC CE commands regardless of their origin (Master Cell Group (MCG) or Secondary Cell Group (SCG)).

For Signalling Radio Bearers (SRBs), duplication is solely controlled by RRC.

There currently exist certain challenge(s). In the architecture of Figure 2 that relies on the separation of CU-CP and CU-UP, the CU-CP decides if/when to configure the PDCP packet duplication feature for each data radio bearer (DRB). However, because the PDCP-U protocol resides in the CU-UP, the actual packet duplication is performed by the CU-UP. Therefore, a mechanism is needed to configure CU-UP to enable PDCP packet duplication for each DRB.

Certain aspects of the present disclosure and their embodiments may provide solutions to these or other challenges. In the solution presented herein, we present solutions for enabling the CU-CP to configure the PDCP packet duplication feature in the CU-UP for DRBs. We also present different mechanisms for establishing two F1-U tunnels between the CU-UP and the DU for the same DRB, depending on whether the CU-CP or the CU-UP allocates the UL TEIDs.

In general terms, the methods described here include allowing configuration of PDCP packet duplication on a per DRB basis from the CU-CP and CU-UP. In case that the CU-CP decides to configure the PDCP packet duplication for a DRB, two F1-U tunnels need to be established between the CU-UP and the DU for this DRB: one F1-U tunnel for carrying the original PDCP packets and one F1-U tunnel for carrying the corresponding duplicates.
- If the CU-CP assigns the F1-U uplink tunnel endpoint identifiers (UL TEIDs), then the CU-CP needs to send two UL TEIDs to the CU-UP for the same DRB to configure PDCP duplication.
- If the CU-UP assigns the UL TEIDs, when requested by the CU-CP to configure PDCP duplication, the CU-UP needs to allocate two UL TEIDs for the same DRB and send them to CU-CP.

Additionally, the CU-CP needs to configure the DU with information about the use of PDCP duplication for a given DRB. This can be achieved by letting the CU-CP signal over the F1 interface to the DU that a given DRB is used for transmission of duplicated PDCP PDUs. The DU would therefore setup two RLC instances, each one for delivery of one instance of the PDCP packet.

A summary of the methods described herein is outlined below.
1) The CU-CP signals over the F1 interface whether a DRB is subject to duplication. Such signaling may be achieved by reusing the current procedures for setting up or modify DRBs in the DU. The signaling may include either an explicit indication of PDCP PDU duplication for a DRB together with the setup of a second DRB at the DU, which represents the second RLC/MAC instance used to transmit duplicate traffic, or by adding in the current signaling to setup a DRB a second DRB ID. Such second DRB ID for a given DRB to be configured allows the DU to understand that there will be two instances of RLC/MAC for the same PDCP traffic, e.g., PDCP traffic will be duplicated.
2) The CU-CP sends an explicit notification to the CU-UP over the E1 interface to indicate that the PDCP duplication feature needs to be configured for a given DRB. This can be done by using a dedicated E1AP message or by adding a new information element (IE) to an existing E1AP message, such as the E1AP Bearer Setup Request and/or the E1AP Bearer Modification Request.
   a. If the CU-CP allocates the UL TEIDS: the new message or the new IE may include also two UL TEIDs for the DRB for which PDCP duplication is going to be activated. The CU-UP uses these UL TEIDs to establish two F1-U tunnels for the DRB in question.
   b. If the CU-UP allocates the UL TEIDS: after receiving the information that PDCP duplication needs to be activate for a given DRB, the CU-UP allocates two UL TEIDs for this DRB and sends them to the CU-CP. The CU-UP can send the UL TEIDs to the CU-CP in a new E1AP reply message or in a new IE in an existing E1AP message, such as the E1AP Bearer Setup Response and/or the E1AP Bearer Modification Response.
3) The CU-CP sends an implicit notification to the CU-UP that PDCP packet duplication is to be activated for one DRB by, e.g., sending two UL TEIDs for this DRB. The CU-UP autonomously understands that PDCP duplication and two F1-U tunnels are to be configured for this DRB.

The solution presented herein provides methods to configure (remove) and activate (deactivate) the PDCP packet duplication feature for DRBs in a gNB architecture where the CU is separated in CU-CP and CU-UP.

Certain embodiments may provide one or more of the following technical advantage(s). The proposed embodiments allow the support of the PDCP packet duplication feature, e.g., defined in TS 38.300 when the NG-RAN node is split in CU-CP, CU-UP, and DU.

In view of the embodiments above, the present disclosure generally includes the following embodiments, e.g., which may address one or more of the issues disclosed herein. In particular, according to the solution presented herein, the CU-CP makes a determination regarding whether to implement PDCP packet duplication per DRB. If the CU-CP decides to implement the packet duplication, the CU-CP notifies the CU-UP of the decision, where the CU-UP configures separate first and second bearer tunnels between the CU-UP and the DU(s) to configure the CU-UP for the packet duplication. In some embodiments, the CU-CP may allocate the uplink tunnel identifiers (e.g., UL TElDs) for the first and second bearer tunnels, where the CU-CP sends the allocated identifiers to the CU-UP. In other embodiments, the CU-UP allocates the uplink tunnel identifiers for the first and second bearer tunnels, and sends the allocated identifiers to the CU-CP to notify the CU-CP of the allocation. This notification by the CU-CP to the CU-UP of the decision for packet duplication per DRB may be explicit, e.g., by sending a duplication signal to the CU-UP that indicates packet duplication per DRB. Alternatively, the notification may be implicit. For example, the CU-CP may send an uplink tunnel identifier (e.g., UL TEID) for each of two bearer tunnels to the CU-UP, where the CU-UP interprets the receipt of such identifiers as an implicit instruction to implement packet duplication. In some embodiments, the CU-CP also notifies the DU(s) of the decision for packet duplication. In response to this notification, the DU(s) may allocate downlink tunnel identifiers for the first and second bearer tunnels and send the allocated identifiers to the CU-CP. In some embodiments, the CU-CP may also inform the DU(s) of the allocated uplink tunnel identifiers, regardless of whether such identifiers are allocated by the CU-CP or the CU-UP. In some embodiments, the first and second bearer tunnels are between a single CU-UP and a single DU. In some embodiments, the first bearer tunnel is between the CU-UP and one DU, while the second bearer tunnel is between the CU-UP and another DU. In this embodiment, both of the DUs involved in the packet duplication are communicatively coupled to the same wireless device, e.g., UE.

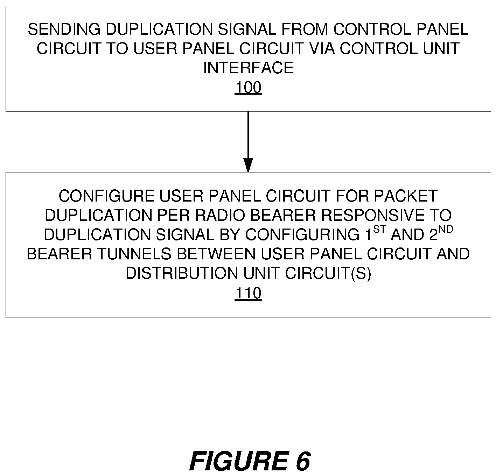

Figure 6 depicts a method in accordance with particular embodiments not forming part of the invention. The method is for implementing packet duplication by a base station comprising a control plane circuit, a user plane circuit, and at least one distribution unit circuit. The control plane circuit operatively connects to the distribution unit circuit(s) via a control plane interface and the control plane circuit operatively connects to the user plane circuit via a control unit interface. The base station is configured to communicate with a wireless device. In accordance with this exemplary embodiment, the method comprises sending a duplication signal from the control plane circuit to the user plane circuit via the control unit interface (block 100). The duplication signal indicates packet duplication per data radio bearer. The method further comprises configuring the user plane circuit for the packet duplication responsive to the duplication signal by configuring separate first and second bearer tunnels between the user plane circuit and the at least one distribution unit circuit (block 110).

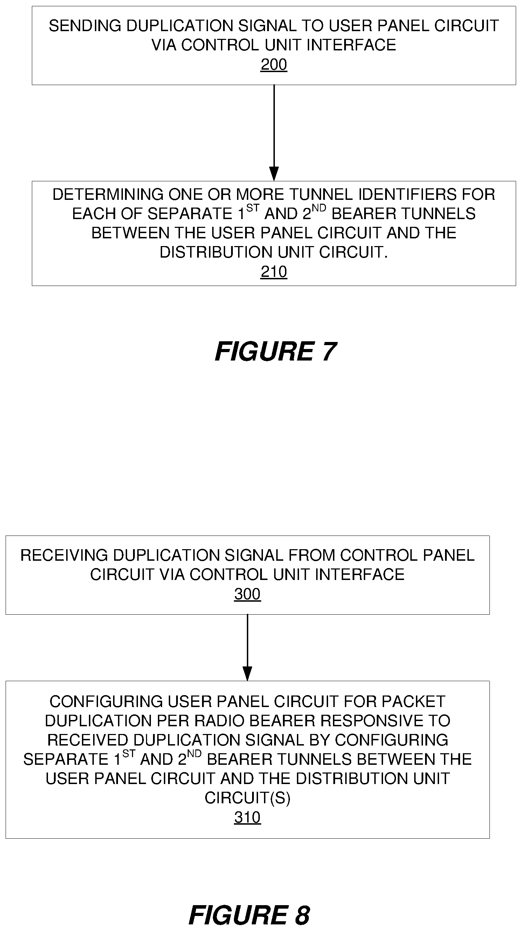

Figure 7 depicts a method in accordance with other particular embodiments. The method is for implementing packet duplication by a base station comprising a control plane circuit, a user plane circuit, and at least one distribution unit circuit. The control plane circuit operatively connects to the distribution unit circuit(s) via a control plane interface and the control plane circuit operatively connects to the user plane circuit via a control unit interface. The base station is configured to communicate with a wireless device. In accordance with this exemplary embodiment, the method is implemented by the control plane circuit and comprises sending a duplication signal to the user plane circuit via the control unit interface (block 200). The duplication signal indicates packet duplication per data radio bearer. The method further comprises determining, for the packet duplication, one or more tunnel identifiers for each of separate first and second bearer tunnels between the user plane circuit and the at least one distribution unit circuit (block 210).

Figure 8 depicts a method in accordance with other particular embodiments. The method is for implementing packet duplication by a base station comprising a control plane circuit, a user plane circuit, and at least one distribution unit circuit. The control plane circuit operatively connects to the distribution unit circuit(s) via a control plane interface and the control plane circuit operatively connects to the user plane circuit via a control unit interface. The base station is configured to communicate with a wireless device. In accordance with this exemplary embodiment, the method is implemented by the user plane circuit and comprises receiving a duplication signal from the control plane circuit via the control unit interface (block 300). The method further comprises configuring the user plane circuit for packet duplication per data radio bearer responsive to the received duplication signal by configuring separate first and second bearer tunnels between the user plane circuit and the at least one distribution unit circuit (block 310).

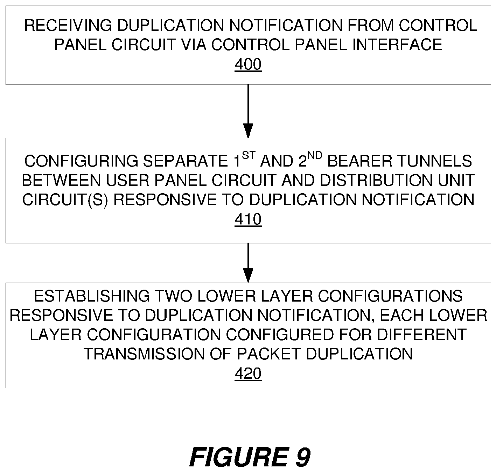

Figure 9 depicts a method in accordance with other particular embodiments. The method is for implementing packet duplication by a base station comprising a control plane circuit, a user plane circuit, and at least one distribution unit circuit. The control plane circuit operatively connects to the distribution unit circuit(s) via a control plane interface and the control plane circuit operatively connects to the user plane circuit via a control unit interface. The base station is configured to communicate with a wireless device. In accordance with this exemplary embodiment, the method is implemented by one of the at least one distribution unit circuits and comprises receiving a duplication notification from the control plane circuit via the control plane interface (block 400). The duplication notification indicates packet duplication per data radio bearer. The method further comprises configuring separate first and second bearer tunnels between the user plane circuit and the at least one distribution unit circuit responsive to the duplication notification (block 410). The method further comprises establishing two lower layer configurations responsive to the duplication notification, each of the lower layer configurations being configured for a different transmission of the packet duplication (block 420)

Note that the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

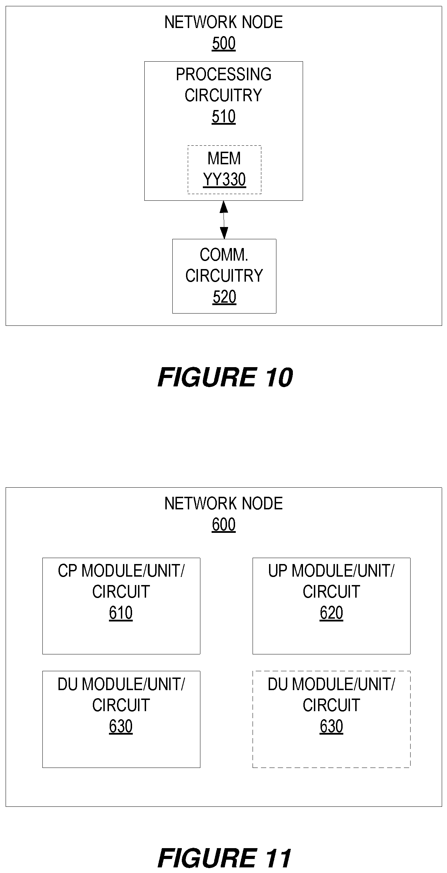

Figure 10 for example illustrates a network node 500 as implemented in accordance with one or more embodiments. As shown, the network node 500 includes processing circuitry 510 and communication circuitry 520. The communication circuitry 520 is configured to transmit and/or receive information to and/or from one or more other nodes, e.g., via any communication technology. The processing circuitry 510 is configured to perform processing described above (e.g., in Figures 6, 7, 8, and/or 9, such as by executing instructions stored in memory 530. The processing circuitry 510in this regard may implement certain functional means, units, or modules.

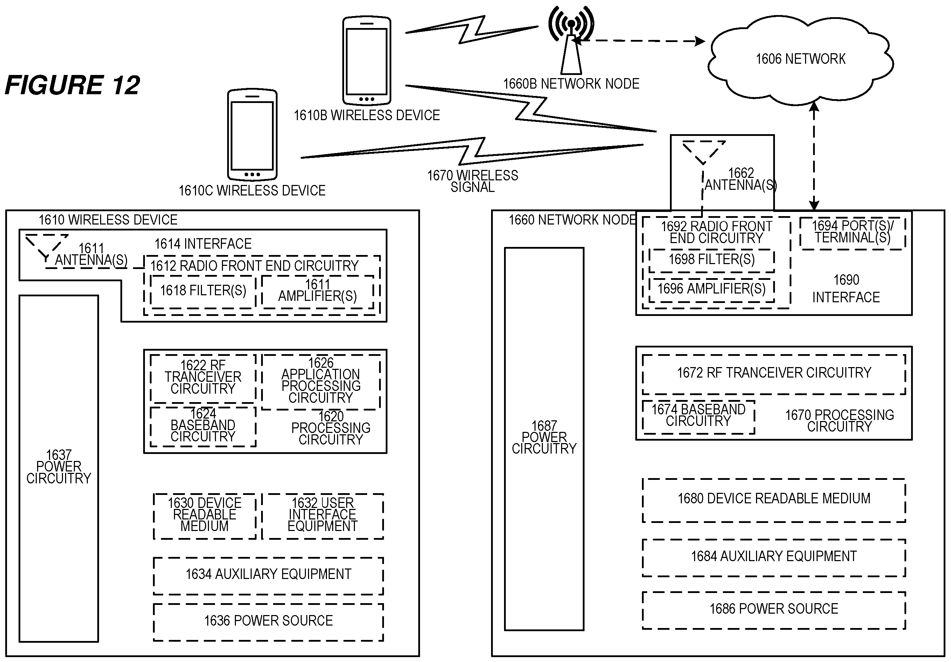

Figure 11 illustrates a schematic block diagram of a network node 600 in a wireless network according to still other embodiments (for example, the wireless network shown in Figure 12). As shown, the network node 600 implements various functional means, units, or modules, e.g., via the processing circuitry 510 in Figure 10 and/or via software code. These functional means, units, circuits, or modules, e.g., for implementing the method(s) herein, include for instance: control plane (CP) module/unit/circuit 610, user plane (UP) module/unit/circuit 620, and one or more distribution units (DUs) modules/unit/circuits 630, where such units interconnect, e.g., as shown in Figure 2.

In one exemplary embodiment, implemented by the base station 600, the CP module/unit/circuit 610 sends a duplication signal to the UP module/unit/circuit 620 via a control unit interface. The duplication signal indicates to the UP module/unit/circuit 620 the decision by the control plane unit/module/circuit 610 for packet duplication per data radio bearer. The UP module/unit/circuit 620 configures separate first and second bearer tunnels between the UP module/unit/circuit 620 and the DU module(s)/unit(s)/circuit(s) 630 to configure the UP module/unit/circuit 620 for the packet duplication responsive to the duplication signal.

In another exemplary embodiment, implemented by the CP module/unit/circuit 610 in the base station 600, the CP module/unit/circuit 610 sends a duplication signal to the UP module/unit/circuit 620 via a control unit interface. The duplication signal indicates a decision by the CP module/unit/circuit 610 for packet duplication per data radio bearer. The CP module/unit/circuit 610 determines, for the packet duplication, one or more tunnel identifiers for each of separate first and second bearer tunnels between the UP module/unit/circuit 620 and the DU module(s)/unit(s)/circuit(s) 630.

In another exemplary embodiment, implemented by the UP module/unit/circuit 620 in the base station 600, the UP module/unit/circuit 620 receives a duplication signal from the CP module/unit/circuit 610 via a control unit interface. The UP module/unit/circuit 620 configures separate first and second bearer tunnels between the UP module/unit/circuit 620 and the DU module(s)/unit(s)/circuit(s) 630 to configure the UP module/unit/circuit 620 for packet duplication per data radio bearer responsive to the received duplication signal.

In another exemplary embodiment, implemented by the DU module/unit/circuit 630 in the base station 600, the DU module/unit/circuit 630 receives a duplication notification from the CP module/unit/circuit 610 via a control plane interface. The duplication notification indicating a decision by the CP module/unit/circuit 610 for packet duplication per data radio bearer. The DU module/unit/circuit 630 configures separate first and second bearer tunnels between the UP module/unit/circuit 620 and the DU module/unit/circuit 630 responsive to the duplication notification. The DU module/unit/circuit 630 establishes two lower layer configurations responsive to the duplication notification, each of the lower layer configurations being configured for a different transmission of the packet duplication.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

Additional embodiments will now be described. At least some of these embodiments may be described as applicable in certain contexts and/or wireless network types for illustrative purposes, but the embodiments are similarly applicable in other contexts and/or wireless network types not explicitly described.

In this section, we provide example call-flows that show how this solution can be applied to configure the PDCP duplication in the architecture of Figure 2.

### Example 0: PDCP Duplication Configuration at the DU

In this embodiment the CU-CP signals to the DU instructions on the setup of two transmission chains for the delivery of duplicate PDCP PDUs. Such transmission chains may include:
- In the case of dual connectivity, two instances of the RLC/MAC protocols, where each instance serves one of the duplicate PDCP PDU flows
- In the case of carrier aggregation, two instances of the RLC protocol, where each instance serves one of the duplicate PDCP PDU flows. The two PDCP PDU flows are then served by the same MAC protocol instance.

It should be noted that the transmission chain structure above is constructed in any of the embodiments of this solution according to, but not limited by, the logic outlined above.

In one embodiment of this method the signaling occurs via the existing F1: UE Context Setup and F1: UE context Setup Modification procedures. The signaling can be done via an explicit indication in such procedure's messages towards the DUs involved in the setup of PDCP duplication and on a per DRB basis.

The signaling from the CU-CP to the DUs involved may be achieved by adding more DRB IDs, e.g. two DRB-IDs, for a DRB that needs to be setup or modified for the purpose of supporting PDCP PDU duplication. This technique would lead to the assignment of two DRB IDs for one DRB setup at a DU. Together with two DRB IDs the same bearer is assigned two UL Tunnel Endpoint IDs (TEIDs) and two DL TEIDs. The DRB will therefore be associated with two GTP-U tunnels, each with its dedicated UL and DL TEIDs and each identifiable with a DRB ID. In the following embodiments

An example of such encoding is shown in the table below for the non-limiting example of the F1: UE Context Setup Request message.

| | | | | | | |
|---|---|---|---|---|---|---|
| DRB to Be Setup List | | *1* | | | YES | reject |
| >DRB to Be Setup Item lEs | | *1* .. *<maxnoo fDRBs>* | | | EACH | reject |
| >>DRB ID | M | | 9.3.1.8 | | - | |
| >>Duplicate DRB ID | O | | 9.3.1.8 | | - | |
| >>E-UTRAN QoS | O | | 9.3.1.19 | Will be used for EN-DC case to convey E-RAB Level QoS Parameters | | |
| >> Tunnels to be setup List | | *1* | | | | |
| >>>Tunnel Is to Be Setup Item lEs | | *1* .. *<maxnoo fULTunn els>* | | | | |
| >>>>UL GTP Tunnel Endpoint | M | | GTP Tunnel Endpoin t 9.3.2.1 | gNB-CU endpoint of the F1 transport bearer. For delivery of UL PDUs. | - | - |
| >>>>Duplicate UL GTP Tunnel Endpoint | M | | GTP Tunnel Endpoin t 9.3.2.1 | gNB-CU endpoint of the F1 transport bearer. For delivery of duplicate UL PDUs. | - | - |

In the example above the Duplicate DRB ID IE indicates to the DU that a second RLC instance (and a second MAC instance for dual connectivity) needs to be created for the delivery of duplicate PDCP PDUs. The encoding may also contain a second UL TEID for the duplicate PDCP PDUs. In the UE context Modification procedures the CU-CP is able to modify a DRB so to add or remove PDCP PDU duplication, by adding or removing the Duplicate DRB ID IE or, as per first embodiment of this method, by updating the indication of duplicate PDCP traffic on a per DRB level and by adding or removing the TEIDs for duplicate PDU transmissions.

### Example 1: PDCP duplication configuration for CA (CU-UP allocates UL TEIDs)

In this embodiment, not forming part of the invention, we present a call-flow that shows how the CU-CP can setup one DRB (DRB1) that uses the PDCP packet duplication feature in the architecture of Figure 2. In this case, we assume that the UE is connected to only one DU and it employs carrier aggregation (CA). The PDCP packets are duplicated over different component carriers.
0. The CU-CP decides that PDCP packet duplication should be used for DRB1 (e.g., for increasing resiliency and/or reducing latency).
1. The CU-CP sends an E1AP Bearer Setup Request message to the CU-UP, including: a new IE to indicate that DRB1 uses PDCP packet duplication. An example of the (partial) structure of the message with the new IE is reported in the table below.

| IE/Group Name | Presen ce | Range | IE type and reference | Semantics description | Criticality | Assigned Criticality |
|---|---|---|---|---|---|---|
| Message Type | M | | 9.2.13 | | YES | Ignore |
| DRB to Setup List | | *1* | | | YES | Reject |
| >DRB to Setup Item lEs | | *1*.. *<maxn oofDR Bs>* | | | EACH | Reject |
| >>DRB ID | M | | | | - | - |
| >>PDCP Duplication | O | | ENUMRATED (Configured, Not-configured...) | | - | - |
| ... | | | | | | |

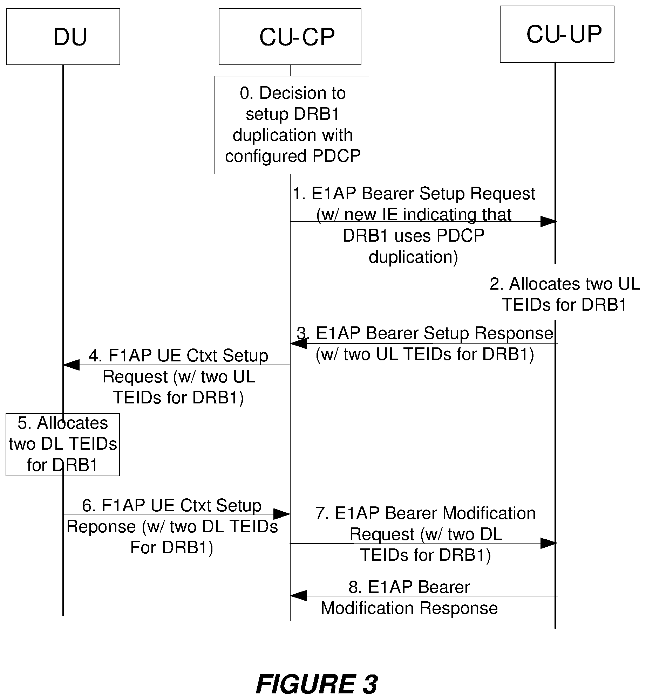

2. The CU-UP reserves two UL TEIDs for DRB1.
3. The CU-UP replies with E1AP Bearer Setup Response message to the CU-CP, including the two allocated UL TEIDs for DRB1.
4. The CU-CP sends the F1AP UE Context Setup Request to the DU including the two UL TEIDs for DRB1. Additionally, the CU-CP may add also the PDCP duplication configuration information described in the Example 1 above.
5. The DU allocates two downlink (DL) TEIDs for DRB1.
6. The DU replies with F1AP UE Context Setup Response to CU-CP, including the two allocated DL TEIDs for DRB1.
7. The CU-CP sends E1AP Bearer Modification Request to the CU-UP, including the two DL TEIDs for DRB1.
8. The CU-UP confirms the successful configuration with E1AP Bearer Modification Response. At this point, the PDCP duplication for DRB1 is successfully configured. See Figure 3 for an example of PDCP duplication configuration for CA.

### Example 2: PDCP duplication configuration for DC (CU-UP allocates UL TEIDs)

In dual-connectivity (DC), an UE can be connected simultaneously to two DUs (DU1 and DU2). We assume that DRB1 is configured as a split bearer (i.e., a single PDCP entity in the CU-UP and two radio legs toward the UE: one over DU1 and one over DU2). The PDCP duplication feature allows duplication of PDCP packets over the two radio legs. Namely, it is possible that the same PDCP PDUs are sent over the two established radio legs.

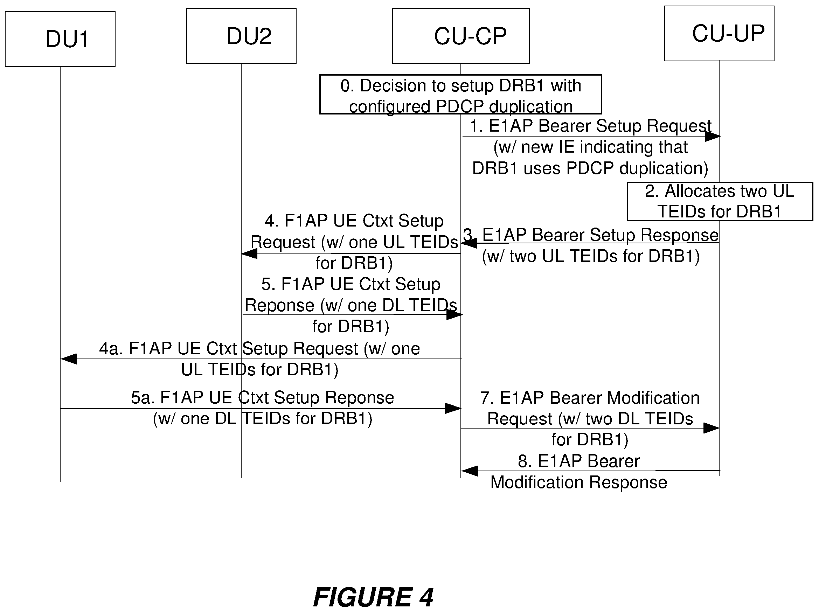

One F1-U tunnel needs to be established between the CU-UP and the DU1 to carry the original packets. Another F1-U tunnel needs to be established between the CU-UP and the DU2 to carry the duplicates. An example of the configuration of PDCP packet duplication for this case is shown in Figure 4. It is worth noting that the CU-UP does not need to know that the two DL TEIDs belong to two different DUs. In Figure 4, the steps 4-5 and 4a-5a can be performed in parallel.

In Figure 4 the CU-CP signals to the CU-UP that a new DRB needs to be established and that PDCP duplication is needed over this DRB. The CU-UP allocates therefore two UL TEIDs and signals them back to the CU-CP. The aim of signaling such information is to let the CU-CP understand that two GTP-U tunnels can be created to signal PDCP duplicate PDUs, each with one of the UL TEIDs assigned. The CU-CP therefore decides to setup one tunnel with one DU (DU1 and another tunnel with another DU (DU2)

In another embodiment of this method the CU-CP has already taken a decision of achieving PDCP duplication via GTP-U tunnels setup with different DUs. For that the CU-CP signals to the CU-UP that two DRBs need to be created, but the two DRBs are to transport the same PDCP content. The CU-UP will therefore assign one UL TEID per DRB and signal this information back to the CU-CP. The CU-UP will use the UL TEID as per previous embodiment, e.g., it will trigger establishment of a DRB and corresponding CTP-U tunnel with each selected DU, using one UL TEID per DRB. In this way the procedure will act as if two independent DRBs are created, both from the point of view of the CU-UP and from the point of view of the two DUs. However, the CU-UP will be informed of delivering the same PDCP traffic over the two DRBs and it will send over the two GTP-U tunnels setup the same PDCP PDUs.

### Example 3: PDCP duplication configuration and separate activation/deactivation

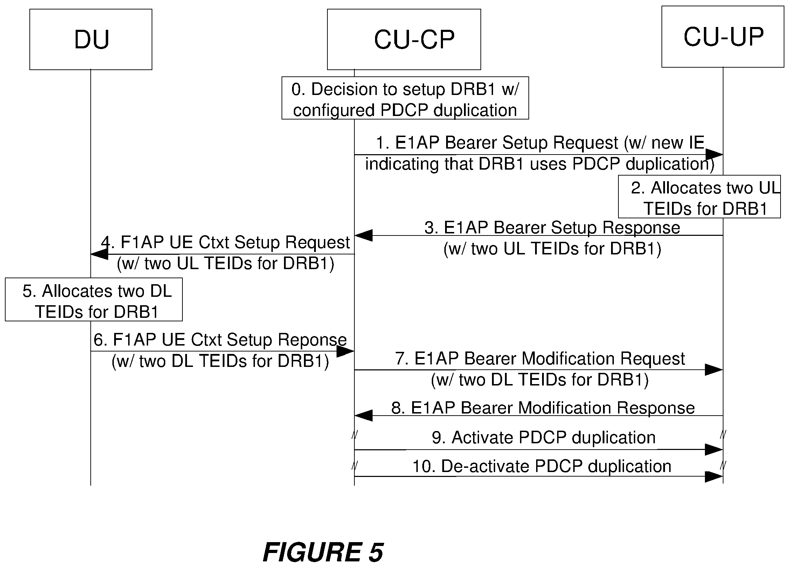

In another embodiment, after the PDCP duplication is configured and the F1-U tunnels are established, the CU-CP sends an additional explicit notification on the E1 interface to the CU-UP informing when to start (and stop) the actual packet duplication. For this purpose, a new class 1 E1AP procedure or a class 2 E1AP procedure can be introduced. Otherwise, the existing E1AP bearer management procedure can be used with the introduction of additional lEs. See Figure 5 for an example of separate activation/deactivation.

In this embodiment the initial phase of the procedure is according to any of the previous embodiments, with the result to establish two GTP-U tunnels between CU-UP and one or more DUs, each tunnel corresponding to one RLC instance. Once the tunnels and DRBs are established the CU-CP decides when to trigger duplication of the PDCP PDUs for the DRB configured for duplication. The CU-CP issues a message to the CU-UP where it informs the CU-UP of the DRBs for which duplication needs to be started and it signals a flag stating to start of duplication. An equivalent message can be triggered to stop duplication for the same DRBs. The CU-UP receiving such messages starts or stops duplicating PDCP PDUs for the DRBs indicated and sends original and duplicate PDUs on the GTP-U tunnels appropriately configured for the bearers supporting duplication.

### Additional embodiments

An additional embodiment covers the case that a new class 1 procedure is used over the E1 and/or F1 interfaces to convey the information for configuring the PDCP packet duplication feature. It also covers the case where the UL TEIDs are allocated by the CU-CP.

The same signaling and procedures as described in the previous section can also be used to remove the PDCP duplication in the CU-UP for a DRB and remove the additional F1-U tunnels.

Although the subject matter described herein may be implemented in any appropriate type of system using any suitable components, the embodiments disclosed herein are described in relation to a wireless network, such as the example wireless network illustrated in Figure 12. For simplicity, the wireless network of Figure 12 only depicts network 1606, network nodes 1660 and 1660b, and WDs 1610, 1610b, and 1610c. In practice, a wireless network may further include any additional elements suitable to support communication between wireless devices or between a wireless device and another communication device, such as a landline telephone, a service provider, or any other network node or end device. Of the illustrated components, network node 1660 and wireless device (WD) 1610 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-IoT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1606 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1660 and WD 1610 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs), and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 12, network node 1660 includes processing circuitry 1670, device readable medium 1680, interface 1690, auxiliary equipment 1684, power source 1686, power circuitry 1687, and antenna 1662. Although network node 1660 illustrated in the example wireless network of Figure 12 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1660 are depicted as single boxes located within a larger box, or nested within multiple boxes, in practice, a network node may comprise multiple different physical components that make up a single illustrated component (e.g., device readable medium 1680 may comprise multiple separate hard drives as well as multiple RAM modules).

Similarly, network node 1660 may be composed of multiple physically separate components (e.g., a NodeB component and a RNC component, or a BTS component and a BSC component, etc.), which may each have their own respective components. In certain scenarios in which network node 1660 comprises multiple separate components (e.g., BTS and BSC components), one or more of the separate components may be shared among several network nodes. For example, a single RNC may control multiple NodeBs. In such a scenario, each unique NodeB and RNC pair may in some instances be considered a single separate network node. In some embodiments, network node 1660 may be configured to support multiple radio access technologies (RATs). In such embodiments, some components may be duplicated (e.g., separate device readable medium 1680 for the different RATs) and some components may be reused (e.g., the same antenna 1662 may be shared by the RATs). Network node 1660 may also include multiple sets of the various illustrated components for different wireless technologies integrated into network node 1660, such as, for example, GSM, WCDMA, LTE, NR, WiFi, or Bluetooth wireless technologies. These wireless technologies may be integrated into the same or different chip or set of chips and other components within network node 1660.

Processing circuitry 1670 is configured to perform any determining, calculating, or similar operations (e.g., certain obtaining operations) described herein as being provided by a network node. These operations performed by processing circuitry 1670 may include processing information obtained by processing circuitry 1670 by, for example, converting the obtained information into other information, comparing the obtained information or converted information to information stored in the network node, and/or performing one or more operations based on the obtained information or converted information, and as a result of said processing making a determination.

Processing circuitry 1670 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1660 components, such as device readable medium 1680, network node 1660 functionality. For example, processing circuitry 1670 may execute instructions stored in device readable medium 1680 or in memory within processing circuitry 1670. Such functionality may include providing any of the various wireless features, functions, or benefits discussed herein. In some embodiments, processing circuitry 1670 may include a system on a chip (SOC).

In some embodiments, processing circuitry 1670 may include one or more of radio frequency (RF) transceiver circuitry 1672 and baseband processing circuitry 1674. In some embodiments, radio frequency (RF) transceiver circuitry 1672 and baseband processing circuitry 1674 may be on separate chips (or sets of chips), boards, or units, such as radio units and digital units. In alternative embodiments, part or all of RF transceiver circuitry 1672 and baseband processing circuitry 1674 may be on the same chip or set of chips, boards, or units

In certain embodiments, some or all of the functionality described herein as being provided by a network node, base station, eNB or other such network device may be performed by processing circuitry 1670 executing instructions stored on device readable medium 1680 or memory within processing circuitry 1670. In alternative embodiments, some or all of the functionality may be provided by processing circuitry 1670 without executing instructions stored on a separate or discrete device readable medium, such as in a hard-wired manner. In any of those embodiments, whether executing instructions stored on a device readable storage medium or not, processing circuitry 1670 can be configured to perform the described functionality. The benefits provided by such functionality are not limited to processing circuitry 1670 alone or to other components of network node 1660, but are enjoyed by network node 1660 as a whole, and/or by end users and the wireless network generally.

Device readable medium 1680 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1670. Device readable medium 1680 may store any suitable instructions, data or information, including a computer program, software, an application including one or more of logic, rules, code, tables, etc. and/or other instructions capable of being executed by processing circuitry 1670 and, utilized by network node 1660. Device readable medium 1680 may be used to store any calculations made by processing circuitry 1670 and/or any data received via interface 1690. In some embodiments, processing circuitry 1670 and device readable medium 1680 may be considered to be integrated.

Interface 1690 is used in the wired or wireless communication of signaling and/or data between network node 1660, network 1606, and/or WDs 1610. As illustrated, interface 1690 comprises port(s)/terminal(s) 1694 to send and receive data, for example to and from network 1606 over a wired connection. Interface 1690 also includes radio front end circuitry 1692 that may be coupled to, or in certain embodiments a part of, antenna 1662. Radio front end circuitry 1692 comprises filters 1698 and amplifiers 1696. Radio front end circuitry 1692 may be connected to antenna 1662 and processing circuitry 1670. Radio front end circuitry may be configured to condition signals communicated between antenna 1662 and processing circuitry 1670. Radio front end circuitry 1692 may receive digital data that is to be sent out to other network nodes or WDs via a wireless connection. Radio front end circuitry 1692 may convert the digital data into a radio signal having the appropriate channel and bandwidth parameters using a combination of filters 1698 and/or amplifiers 1696. The radio signal may then be transmitted via antenna 1662. Similarly, when receiving data, antenna 1662 may collect radio signals which are then converted into digital data by radio front end circuitry 1692. The digital data may be passed to processing circuitry 1670. In other embodiments, the interface may comprise different components and/or different combinations of components.

In certain alternative embodiments, network node 1660 may not include separate radio front end circuitry 1692; instead, processing circuitry 1670 may comprise radio front end circuitry and may be connected to antenna 1662 without separate radio front end circuitry 1692. Similarly, in some embodiments, all or some of RF transceiver circuitry 1672 may be considered a part of interface 1690. In still other embodiments, interface 1690 may include one or more ports or terminals 1694, radio front end circuitry 1692, and RF transceiver circuitry 1672, as part of a radio unit (not shown), and interface 1690 may communicate with baseband processing circuitry 1674, which is part of a digital unit (not shown).

Antenna 1662 may include one or more antennas, or antenna arrays, configured to send and/or receive wireless signals. Antenna 1662 may be coupled to radio front end circuitry 1690 and may be any type of antenna capable of transmitting and receiving data and/or signals wirelessly. In some embodiments, antenna 1662 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1662 may be separate from network node 1660 and may be connectable to network node 1660 through an interface or port.

Antenna 1662, interface 1690, and/or processing circuitry 1670 may be configured to perform any receiving operations and/or certain obtaining operations described herein as being performed by a network node. Any information, data and/or signals may be received from a wireless device, another network node and/or any other network equipment. Similarly, antenna 1662, interface 1690, and/or processing circuitry 1670 may be configured to perform any transmitting operations described herein as being performed by a network node. Any information, data and/or signals may be transmitted to a wireless device, another network node and/or any other network equipment.

Power circuitry 1687 may comprise, or be coupled to, power management circuitry and is configured to supply the components of network node 1660 with power for performing the functionality described herein. Power circuitry 1687 may receive power from power source 1686. Power source 1686 and/or power circuitry 1687 may be configured to provide power to the various components of network node 1660 in a form suitable for the respective components (e.g., at a voltage and current level needed for each respective component). Power source 1686 may either be included in, or external to, power circuitry 1687 and/or network node 1660. For example, network node 1660 may be connectable to an external power source (e.g., an electricity outlet) via an input circuitry or interface such as an electrical cable, whereby the external power source supplies power to power circuitry 1687. As a further example, power source 1686 may comprise a source of power in the form of a battery or battery pack which is connected to, or integrated in, power circuitry 1687. The battery may provide backup power should the external power source fail. Other types of power sources, such as photovoltaic devices, may also be used.

Alternative embodiments of network node 1660 may include additional components beyond those shown in Figure 12 that may be responsible for providing certain aspects of the network node's functionality, including any of the functionality described herein and/or any functionality necessary to support the subject matter described herein. For example, network node 1660 may include user interface equipment to allow input of information into network node 1660 and to allow output of information from network node 1660. This may allow a user to perform diagnostic, maintenance, repair, and other administrative functions for network node 1660.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (loT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1610 includes antenna 1611, interface 1614, processing circuitry 1620, device readable medium 1630, user interface equipment 1632, auxiliary equipment 1634, power source 1636 and power circuitry 1637. WD 1610 may include multiple sets of one or more of the illustrated components for different wireless technologies supported by WD 1610, such as, for example, GSM, WCDMA, LTE, NR, WiFi, WiMAX, NB-IoT, or Bluetooth wireless technologies, just to mention a few. These wireless technologies may be integrated into the same or different chips or set of chips as other components within WD 1610.

Antenna 1611 may include one or more antennas or antenna arrays, configured to send and/or receive wireless signals, and is connected to interface 1614. In certain alternative embodiments, antenna 1611 may be separate from WD 1610 and be connectable to WD 1610 through an interface or port. Antenna 1611, interface 1614, and/or processing circuitry 1620 may be configured to perform any receiving or transmitting operations described herein as being performed by a WD. Any information, data and/or signals may be received from a network node and/or another WD. In some embodiments, radio front end circuitry and/or antenna 1611 may be considered an interface.

As illustrated, interface 1614 comprises radio front end circuitry 1612 and antenna 1611. Radio front end circuitry 1612 comprise one or more filters 1618 and amplifiers 1616. Radio front end circuitry 1614 is connected to antenna 1611 and processing circuitry 1620, and is configured to condition signals communicated between antenna 1611 and processing circuitry 1620. Radio front end circuitry 1612 may be coupled to or a part of antenna 1611. In some embodiments, WD 1610 may not include separate radio front end circuitry 1612; rather, processing circuitry 1620 may comprise radio front end circuitry and may be connected to antenna 1611. Similarly, in some embodiments, some or all of RF transceiver circuitry 1622 may be considered a part of interface 1614. Radio front end circuitry 1612 may receive digital data that is to be sent out to other network nodes or WDs via a wireless connection. Radio front end circuitry 1612 may convert the digital data into a radio signal having the appropriate channel and bandwidth parameters using a combination of filters 1618 and/or amplifiers 1616. The radio signal may then be transmitted via antenna 1611. Similarly, when receiving data, antenna 1611 may collect radio signals which are then converted into digital data by radio front end circuitry 1612. The digital data may be passed to processing circuitry 1620. In other embodiments, the interface may comprise different components and/or different combinations of components.

Processing circuitry 1620 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1610 components, such as device readable medium 1630, WD 1610 functionality. Such functionality may include providing any of the various wireless features or benefits discussed herein. For example, processing circuitry 1620 may execute instructions stored in device readable medium 1630 or in memory within processing circuitry 1620 to provide the functionality disclosed herein.

As illustrated, processing circuitry 1620 includes one or more of RF transceiver circuitry 1622, baseband processing circuitry 1624, and application processing circuitry 1626. In other embodiments, the processing circuitry may comprise different components and/or different combinations of components. In certain embodiments processing circuitry 1620 of WD 1610 may comprise a SOC. In some embodiments, RF transceiver circuitry 1622, baseband processing circuitry 1624, and application processing circuitry 1626 may be on separate chips or sets of chips. In alternative embodiments, part or all of baseband processing circuitry 1624 and application processing circuitry 1626 may be combined into one chip or set of chips, and RF transceiver circuitry 1622 may be on a separate chip or set of chips. In still alternative embodiments, part or all of RF transceiver circuitry 1622 and baseband processing circuitry 1624 may be on the same chip or set of chips, and application processing circuitry 1626 may be on a separate chip or set of chips. In yet other alternative embodiments, part or all of RF transceiver circuitry 1622, baseband processing circuitry 1624, and application processing circuitry 1626 may be combined in the same chip or set of chips. In some embodiments, RF transceiver circuitry 1622 may be a part of interface 1614. RF transceiver circuitry 1622 may condition RF signals for processing circuitry 1620.

In certain embodiments, some or all of the functionality described herein as being performed by a WD may be provided by processing circuitry 1620 executing instructions stored on device readable medium 1630, which in certain embodiments may be a computer-readable storage medium. In alternative embodiments, some or all of the functionality may be provided by processing circuitry 1620 without executing instructions stored on a separate or discrete device readable storage medium, such as in a hard-wired manner. In any of those particular embodiments, whether executing instructions stored on a device readable storage medium or not, processing circuitry 1620 can be configured to perform the described functionality. The benefits provided by such functionality are not limited to processing circuitry 1620 alone or to other components of WD 1610, but are enjoyed by WD 1610 as a whole, and/or by end users and the wireless network generally.

Processing circuitry 1620 may be configured to perform any determining, calculating, or similar operations (e.g., certain obtaining operations) described herein as being performed by a WD. These operations, as performed by processing circuitry 1620, may include processing information obtained by processing circuitry 1620 by, for example, converting the obtained information into other information, comparing the obtained information or converted information to information stored by WD 1610, and/or performing one or more operations based on the obtained information or converted information, and as a result of said processing making a determination.

Device readable medium 1630 may be operable to store a computer program, software, an application including one or more of logic, rules, code, tables, etc. and/or other instructions capable of being executed by processing circuitry 1620. Device readable medium 1630 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1620. In some embodiments, processing circuitry 1620 and device readable medium 1630 may be considered to be integrated.

User interface equipment 1632 may provide components that allow for a human user to interact with WD 1610. Such interaction may be of many forms, such as visual, audial, tactile, etc. User interface equipment 1632 may be operable to produce output to the user and to allow the user to provide input to WD 1610. The type of interaction may vary depending on the type of user interface equipment 1632 installed in WD 1610. For example, if WD 1610 is a smart phone, the interaction may be via a touch screen; if WD 1610 is a smart meter, the interaction may be through a screen that provides usage (e.g., the number of gallons used) or a speaker that provides an audible alert (e.g., if smoke is detected). User interface equipment 1632 may include input interfaces, devices and circuits, and output interfaces, devices and circuits. User interface equipment 1632 is configured to allow input of information into WD 1610, and is connected to processing circuitry 1620 to allow processing circuitry 1620 to process the input information. User interface equipment 1632 may include, for example, a microphone, a proximity or other sensor, keys/buttons, a touch display, one or more cameras, a USB port, or other input circuitry. User interface equipment 1632 is also configured to allow output of information from WD 1610, and to allow processing circuitry 1620 to output information from WD 1610. User interface equipment 1632 may include, for example, a speaker, a display, vibrating circuitry, a USB port, a headphone interface, or other output circuitry. Using one or more input and output interfaces, devices, and circuits, of user interface equipment 1632, WD 1610 may communicate with end users and/or the wireless network, and allow them to benefit from the functionality described herein.

Auxiliary equipment 1634 is operable to provide more specific functionality which may not be generally performed by WDs. This may comprise specialized sensors for doing measurements for various purposes, interfaces for additional types of communication such as wired communications etc. The inclusion and type of components of auxiliary equipment 1634 may vary depending on the embodiment and/or scenario.

Power source 1636 may, in some embodiments, be in the form of a battery or battery pack. Other types of power sources, such as an external power source (e.g., an electricity outlet), photovoltaic devices or power cells, may also be used. WD 1610 may further comprise power circuitry 1637 for delivering power from power source 1636 to the various parts of WD 1610 which need power from power source 1636 to carry out any functionality described or indicated herein. Power circuitry 1637 may in certain embodiments comprise power management circuitry. Power circuitry 1637 may additionally or alternatively be operable to receive power from an external power source; in which case WD 1610 may be connectable to the external power source (such as an electricity Power circuitry 1637 may also in certain embodiments be operable to deliver power from an external power source to power source 1636. This may be, for example, for the charging of power source 1636. Power circuitry 1637 may perform any formatting, converting, or other modification to the power from power source 1636 to make the power suitable for the respective components of WD 1610 to which power is supplied.

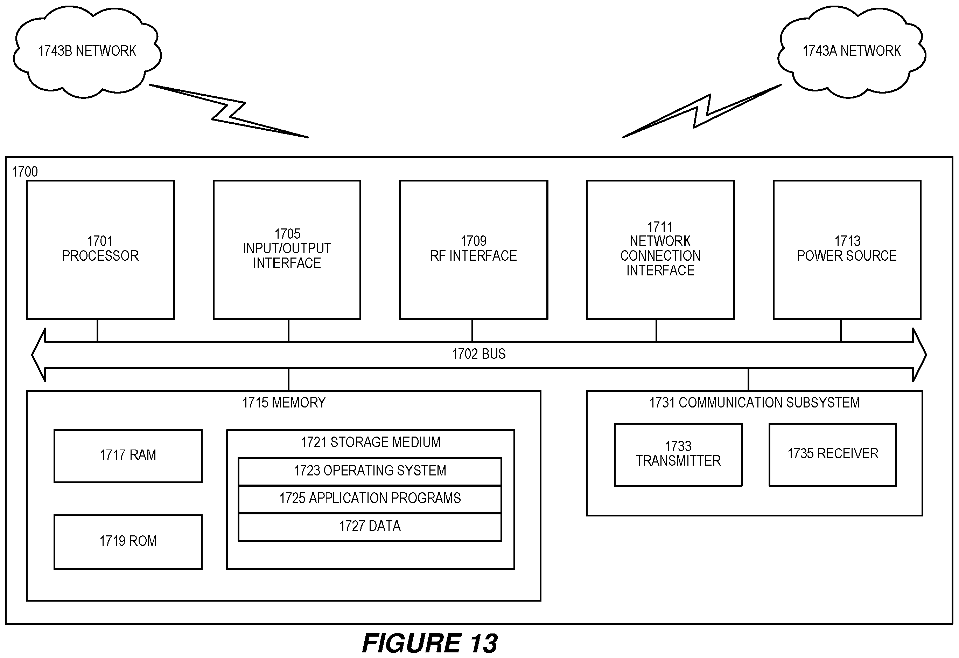

Figure 13 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1720 may be any UE identified by the 3^{rd} Generation Partnership Project (3GPP), including a NB-loT UE, a machine type communication (MTC) UE, and/or an enhanced MTC (eMTC) UE. UE 1700, as illustrated in Figure 13, is one example of a

WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 13 is a UE, the components discussed herein are equally applicable to a WD, and vice-versa.

In Figure 13, UE 1700 includes processing circuitry 1701 that is operatively coupled to input/output interface 1705, radio frequency (RF) interface 1709, network connection interface 1711, memory 1715 including random access memory (RAM) 1717, read-only memory (ROM) 1719, and storage medium 1721 or the like, communication subsystem 1731, power source 1733, and/or any other component, or any combination thereof. Storage medium 1721 includes operating system 1723, application program 1725, and data 1727. In other embodiments, storage medium 1721 may include other similar types of information. Certain UEs may utilize all of the components shown in Figure 13, or only a subset of the components. The level of integration between the components may vary from one UE to another UE. Further, certain UEs may contain multiple instances of a component, such as multiple processors, memories, transceivers, transmitters, receivers, etc.

In Figure 13, processing circuitry 1701 may be configured to process computer instructions and data. Processing circuitry 1701 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1701 may include two central processing units (CPUs). Data may be information in a form suitable for use by a computer.

In the depicted embodiment, input/output interface 1705 may be configured to provide a communication interface to an input device, output device, or input and output device. UE 1700 may be configured to use an output device via input/output interface 1705. An output device may use the same type of interface port as an input device. For example, a USB port may be used to provide input to and output from UE 1700. The output device may be a speaker, a sound card, a video card, a display, a monitor, a printer, an actuator, an emitter, a smartcard, another output device, or any combination thereof. UE 1700 may be configured to use an input device via input/output interface 1705 to allow a user to capture information into UE 1700. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 13, RF interface 1709 may be configured to provide a communication interface to RF components such as a transmitter, a receiver, and an antenna. Network connection interface 1711 may be configured to provide a communication interface to network 1743a. Network 1743a may encompass wired and/or wireless networks such as a local-area network (LAN), a wide-area network (WAN), a computer network, a wireless network, a telecommunications network, another like network or any combination thereof. For example, network 1743a may comprise a Wi-Fi network. Network connection interface 1711 may be configured to include a receiver and a transmitter interface used to communicate with one or more other devices over a communication network according to one or more communication protocols, such as Ethernet, TCP/IP, SONET, ATM, or the like. Network connection interface 1711 may implement receiver and transmitter functionality appropriate to the communication network links (e.g., optical, electrical, and the like). The transmitter and receiver functions may share circuit components, software or firmware, or alternatively may be implemented separately.

RAM 1717 may be configured to interface via bus 1702 to processing circuitry 1701 to provide storage or caching of data or computer instructions during the execution of software programs such as the operating system, application programs, and device drivers. ROM 1719 may be configured to provide computer instructions or data to processing circuitry 1701. For example, ROM 1719 may be configured to store invariant low-level system code or data for basic system functions such as basic input and output (I/O), startup, or reception of keystrokes from a keyboard that are stored in a non-volatile memory. Storage medium 1721 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1721 may be configured to include operating system 1723, application program 1725 such as a web browser application, a widget or gadget engine or another application, and data file 1727. Storage medium 1721 may store, for use by UE 1700, any of a variety of various operating systems or combinations of operating systems.

Storage medium 1721 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity

(SIM/RUIM) module, other memory, or any combination thereof. Storage medium 1721 may allow UE 1700 to access computer-executable instructions, application programs or the like, stored on transitory or non-transitory memory media, to off-load data, or to upload data. An article of manufacture, such as one utilizing a communication system may be tangibly embodied in storage medium 1721, which may comprise a device readable medium.

In Figure 13, processing circuitry 1701 may be configured to communicate with network 1743b using communication subsystem 1731. Network 1743a and network 1743b may be the same network or networks or different network or networks. Communication subsystem 1731 may be configured to include one or more transceivers used to communicate with network 1743b. For example, communication subsystem 1731 may be configured to include one or more transceivers used to communicate with one or more remote transceivers of another device capable of wireless communication such as another WD, UE, or base station of a radio access network (RAN) according to one or more communication protocols, such as IEEE 802.12, CDMA, WCDMA, GSM, LTE, UTRAN, WiMax, or the like. Each transceiver may include transmitter 1733 and/or receiver 1735 to implement transmitter or receiver functionality, respectively, appropriate to the RAN links (e.g., frequency allocations and the like). Further, transmitter 1733 and receiver 1735 of each transceiver may share circuit components, software or firmware, or alternatively may be implemented separately.

In the illustrated embodiment, the communication functions of communication subsystem 1731 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1731 may include cellular communication, Wi-Fi communication, Bluetooth communication, and GPS communication. Network 1743b may encompass wired and/or wireless networks such as a local-area network (LAN), a wide-area network (WAN), a computer network, a wireless network, a telecommunications network, another like network or any combination thereof. For example, network 1743b may be a cellular network, a Wi-Fi network, and/or a near-field network. Power source 1713 may be configured to provide alternating current (AC) or direct current (DC) power to components of UE 1700.

The features, benefits and/or functions described herein may be implemented in one of the components of UE 1700 or partitioned across multiple components of UE 1700. Further, the features, benefits, and/or functions described herein may be implemented in any combination of hardware, software or firmware. In one example, communication subsystem 1731 may be configured to include any of the components described herein. Further, processing circuitry 1701 may be configured to communicate with any of such components over bus 1702. In another example, any of such components may be represented by program instructions stored in memory that when executed by processing circuitry 1701 perform the corresponding functions described herein. In another example, the functionality of any of such components may be partitioned between processing circuitry 1701 and communication subsystem 1731. In another example, the non-computationally intensive functions of any of such components may be implemented in software or firmware and the computationally intensive functions may be implemented in hardware.

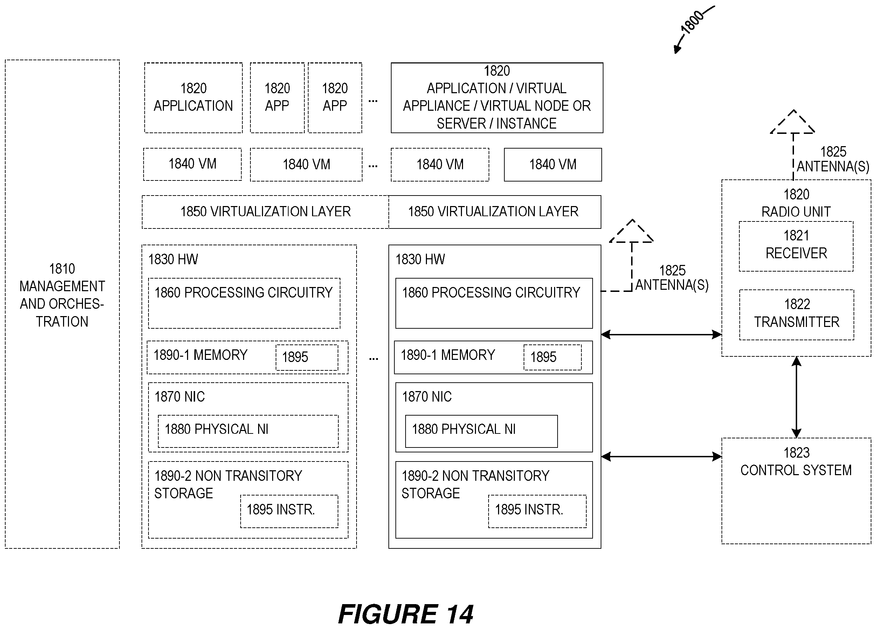

Figure 14 is a schematic block diagram illustrating a virtualization environment 1800 in which functions implemented by some embodiments may be virtualized. In the present context, virtualizing means creating virtual versions of apparatuses or devices, which may include virtualizing hardware platforms, storage devices, and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1800 hosted by one or more of hardware nodes 1830. Further, in embodiments in which the virtual node is not a radio access node or does not require radio connectivity (e.g., a core network node), then the network node may be entirely virtualized.

The functions may be implemented by one or more applications 1820 (which may alternatively be called software instances, virtual appliances, network functions, virtual nodes, virtual network functions, etc.) operative to implement some of the features, functions, and/or benefits of some of the embodiments disclosed herein. Applications 1820 are run in virtualization environment 1800 which provides hardware 1830 comprising processing circuitry 1860 and memory 1890. Memory 1890 contains instructions 1895 executable by processing circuitry 1860 whereby application 1820 is operative to provide one or more of the features, benefits, and/or functions disclosed herein.

Virtualization environment 1800, comprises general-purpose or special-purpose network hardware devices 1830 comprising a set of one or more processors or processing circuitry 1860, which may be commercial off-the-shelf (COTS) processors, dedicated Application Specific Integrated Circuits (ASICs), or any other type of processing circuitry including digital or analog hardware components or special purpose processors. Each hardware device may comprise memory 1890-1 which may be non-persistent memory for temporarily storing instructions 1895 or software executed by processing circuitry 1860. Each hardware device may comprise one or more network interface controllers (NICs) 1870, also known as network interface cards, which include physical network interface 1880. Each hardware device may also include non-transitory, persistent, machine-readable storage media 1890-2 having stored therein software 1895 and/or instructions executable by processing circuitry 1860. Software 1895 may include any type of software including software for instantiating one or more virtualization layers 1850 (also referred to as hypervisors), software to execute virtual machines 1840 as well as software allowing it to execute functions, features and/or benefits described in relation with some embodiments described herein.

Virtual machines 1840, comprise virtual processing, virtual memory, virtual networking or interface and virtual storage, and may be run by a corresponding virtualization layer 1850 or hypervisor. Different embodiments of the instance of virtual appliance 1820 may be implemented on one or more of virtual machines 1840, and the implementations may be made in different ways.

During operation, processing circuitry 1860 executes software 1895 to instantiate the hypervisor or virtualization layer 1850, which may sometimes be referred to as a virtual machine monitor (VMM). Virtualization layer 1850 may present a virtual operating platform that appears like networking hardware to virtual machine 1840.

As shown in Figure 14, hardware 1830 may be a standalone network node with generic or specific components. Hardware 1830 may comprise antenna 18225 and may implement some functions via virtualization. Alternatively, hardware 1830 may be part of a larger cluster of hardware (e.g. such as in a data center or customer premise equipment (CPE)) where many hardware nodes work together and are managed via management and orchestration (MANO) 1810, which, among others, oversees lifecycle management of applications 1820.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1840 may be a software implementation of a physical machine that runs programs as if they were executing on a physical, non-virtualized machine. Each of virtual machines 1840, and that part of hardware 1830 that executes that virtual machine, be it hardware dedicated to that virtual machine and/or hardware shared by that virtual machine with others of the virtual machines 1840, forms a separate virtual network elements (VNE).

Still in the context of NFV, Virtual Network Function (VNF) is responsible for handling specific network functions that run in one or more virtual machines 1840 on top of hardware networking infrastructure 1830 and corresponds to application 1820 in Figure 14.

In some embodiments, one or more radio units 1820 that each include one or more transmitters 1822 and one or more receivers 1821 may be coupled to one or more antennas 1825. Radio units 1820 may communicate directly with hardware nodes 1830 via one or more appropriate network interfaces and may be used in combination with the virtual components to provide a virtual node with radio capabilities, such as a radio access node or a base station.

In some embodiments, some signaling can be effected with the use of control system 1823 which may alternatively be used for communication between the hardware nodes 1830 and radio units 1820.

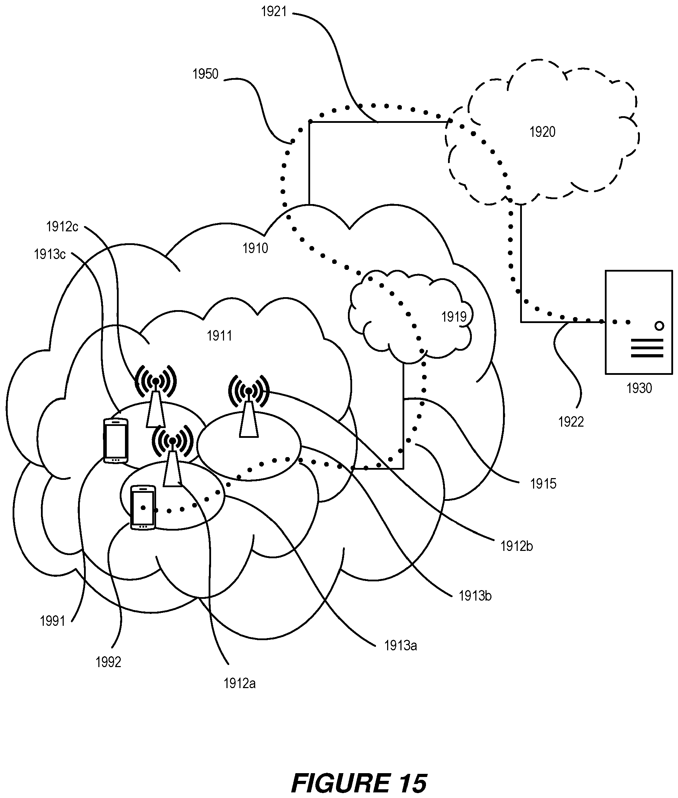

Figure 15 illustrates a telecommunication network connected via an intermediate network to a host computer in accordance with some embodiments. In particular, with reference to Figure 15, in accordance with an embodiment, a communication system includes telecommunication network 1910, such as a 3GPP-type cellular network, which comprises access network 1911, such as a radio access network, and core network 1914. Access network 1911 comprises a plurality of base stations 1912a, 1912b, 1912c, such as NBs, eNBs, gNBs or other types of wireless access points, each defining a corresponding coverage area 1913a, 1913b, 1913c. Each base station 1912a, 1912b, 1912c is connectable to core network 1914 over a wired or wireless connection 1915. A first UE 1991 located in coverage area 1913c is configured to wirelessly connect to, or be paged by, the corresponding base station 1912c. A second UE 1992 in coverage area 1913a is wirelessly connectable to the corresponding base station 1912a. While a plurality of UEs 1991, 1992 are illustrated in this example, the disclosed embodiments are equally applicable to a situation where a sole UE is in the coverage area or where a sole UE is connecting to the corresponding base station 1912.

Telecommunication network 1910 is itself connected to host computer 1930, which may be embodied in the hardware and/or software of a standalone server, a cloud-implemented server, a distributed server or as processing resources in a server farm. Host computer 1930 may be under the ownership or control of a service provider, or may be operated by the service provider or on behalf of the service provider. Connections 1921 and 1922 between telecommunication network 1910 and host computer 1930 may extend directly from core network 1914 to host computer 1930 or may go via an optional intermediate network 1920. Intermediate network 1920 may be one of, or a combination of more than one of, a public, private or hosted network; intermediate network 1920, if any, may be a backbone network or the Internet; in particular, intermediate network 1920 may comprise two or more sub-networks (not shown).

The communication system of Figure 15 as a whole enables connectivity between the connected UEs 1991, 1992 and host computer 1930. The connectivity may be described as an over-the-top (OTT) connection 1950. Host computer 1930 and the connected UEs 1991, 1992 are configured to communicate data and/or signaling via OTT connection 1950, using access network 1911, core network 1914, any intermediate network 1920 and possible further infrastructure (not shown) as intermediaries. OTT connection 1950 may be transparent in the sense that the participating communication devices through which OTT connection 1950 passes are unaware of routing of uplink and downlink communications. For example, base station 1912 may not or need not be informed about the past routing of an incoming downlink communication with data originating from host computer 1930 to be forwarded (e.g., handed over) to a connected UE 1991. Similarly, base station 1912 need not be aware of the future routing of an outgoing uplink communication originating from the UE 1991 towards the host computer 1930.

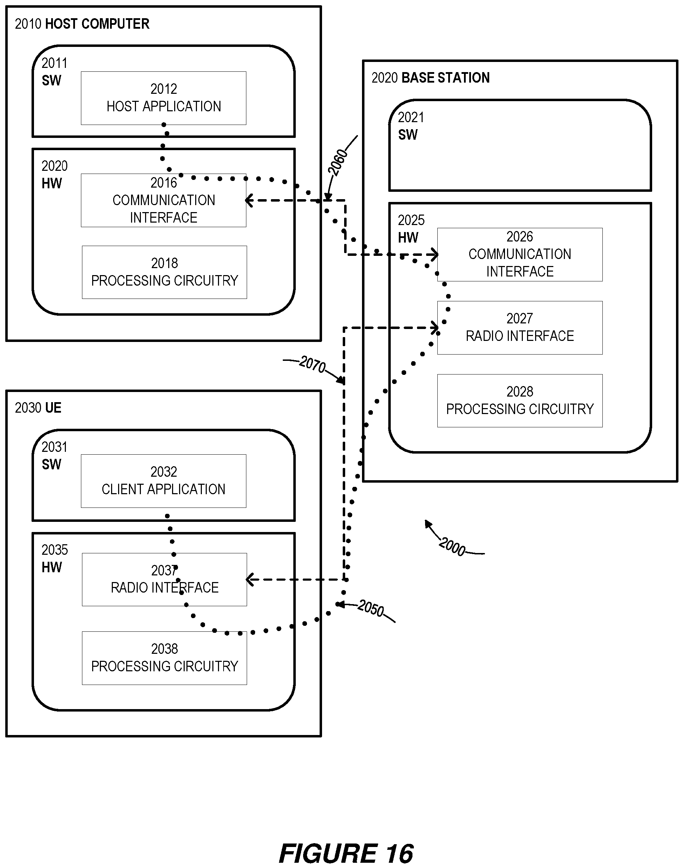

Example implementations, in accordance with an embodiment, of the UE, base station and host computer discussed in the preceding paragraphs will now be described with reference to Figure 16. Figure 16 illustrates host computer communicating via a base station with a user equipment over a partially wireless connection in accordance with some embodiments In communication system 2000, host computer 2010 comprises hardware 2015 including communication interface 2016 configured to set up and maintain a wired or wireless connection with an interface of a different communication device of communication system 2000. Host computer 2010 further comprises processing circuitry 2018, which may have storage and/or processing capabilities. In particular, processing circuitry 2018 may comprise one or more programmable processors, application-specific integrated circuits, field programmable gate arrays or combinations of these (not shown) adapted to execute instructions. Host computer 2010 further comprises software 2011, which is stored in or accessible by host computer 2010 and executable by processing circuitry 2018. Software 2011 includes host application 2012. Host application 2012 may be operable to provide a service to a remote user, such as UE 2030 connecting via OTT connection 2050 terminating at UE 2030 and host computer 2010. In providing the service to the remote user, host application 2012 may provide user data which is transmitted using OTT connection 2050.

Communication system 2000 further includes base station 2020 provided in a telecommunication system and comprising hardware 2025 enabling it to communicate with host computer 2010 and with UE 2030. Hardware 2025 may include communication interface 2026 for setting up and maintaining a wired or wireless connection with an interface of a different communication device of communication system 2000, as well as radio interface 2027 for setting up and maintaining at least wireless connection 2070 with UE 2030 located in a coverage area (not shown in Figure 16) served by base station 2020. Communication interface 2026 may be configured to facilitate connection 2060 to host computer 2010. Connection 2060 may be direct or it may pass through a core network (not shown in Figure 16) of the telecommunication system and/or through one or more intermediate networks outside the telecommunication system. In the embodiment shown, hardware 2025 of base station 2020 further includes processing circuitry 2028, which may comprise one or more programmable processors, application-specific integrated circuits, field programmable gate arrays or combinations of these (not shown) adapted to execute instructions. Base station 2020 further has software 2021 stored internally or accessible via an external connection.

Communication system 2000 further includes UE 2030 already referred to. Its hardware 2035 may include radio interface 2037 configured to set up and maintain wireless connection 2070 with a base station serving a coverage area in which UE 2030 is currently located. Hardware 2035 of UE 2030 further includes processing circuitry 2038, which may comprise one or more programmable processors, application-specific integrated circuits, field programmable gate arrays or combinations of these (not shown) adapted to execute instructions. UE 2030 further comprises software 2031, which is stored in or accessible by UE 2030 and executable by processing circuitry 2038. Software 2031 includes client application 2032. Client application 2032 may be operable to provide a service to a human or non-human user via UE 2030, with the support of host computer 2010. In host computer 2010, an executing host application 2012 may communicate with the executing client application 2032 via OTT connection 2050 terminating at UE 2030 and host computer 2010. In providing the service to the user, client application 2032 may receive request data from host application 2012 and provide user data in response to the request data. OTT connection 2050 may transfer both the request data and the user data. Client application 2032 may interact with the user to generate the user data that it provides.

It is noted that host computer 2010, base station 2020 and UE 2030 illustrated in Figure 16 may be similar or identical to host computer 2030, one of base stations 2012a, 2012b, 2012c and one of UEs 2091, 2092 of Figure 16, respectively. This is to say, the inner workings of these entities may be as shown in Figure 16 and independently, the surrounding network topology may be that of Figure 16.

In Figure 16, OTT connection 2050 has been drawn abstractly to illustrate the communication between host computer 2010 and UE 2030 via base station 2020, without explicit reference to any intermediary devices and the precise routing of messages via these devices. Network infrastructure may determine the routing, which it may be configured to hide from UE 2030 or from the service provider operating host computer 2010, or both. While OTT connection 2050 is active, the network infrastructure may further take decisions by which it dynamically changes the routing (e.g., on the basis of load balancing consideration or reconfiguration of the network).

Wireless connection 2070 between UE 2030 and base station 2020 is in accordance with the teachings of the embodiments described throughout this disclosure. One or more of the various embodiments improve the performance of OTT services provided to UE 2030 using OTT connection 2050, in which wireless connection 2070 forms the last segment.

A measurement procedure may be provided for the purpose of monitoring data rate, latency and other factors on which the one or more embodiments improve. There may further be an optional network functionality for reconfiguring OTT connection 2050 between host computer 2010 and UE 2030, in response to variations in the measurement results. The measurement procedure and/or the network functionality for reconfiguring OTT connection 2050 may be implemented in software 2011 and hardware 2015 of host computer 2010 or in software 2031 and hardware 2035 of UE 2030, or both. In embodiments, sensors (not shown) may be deployed in or in association with communication devices through which OTT connection 2050 passes; the sensors may participate in the measurement procedure by supplying values of the monitored quantities exemplified above, or supplying values of other physical quantities from which software 2011, 2031 may compute or estimate the monitored quantities. The reconfiguring of OTT connection 2050 may include message format, retransmission settings, preferred routing etc.; the reconfiguring need not affect base station 2020, and it may be unknown or imperceptible to base station 2020. Such procedures and functionalities may be known and practiced in the art. In certain embodiments, measurements may involve proprietary UE signaling facilitating host computer 2010's measurements of throughput, propagation times, latency and the like. The measurements may be implemented in that software 2011 and 2031 causes messages to be transmitted, in particular empty or 'dummy' messages, using OTT connection 2050 while it monitors propagation times, errors etc.

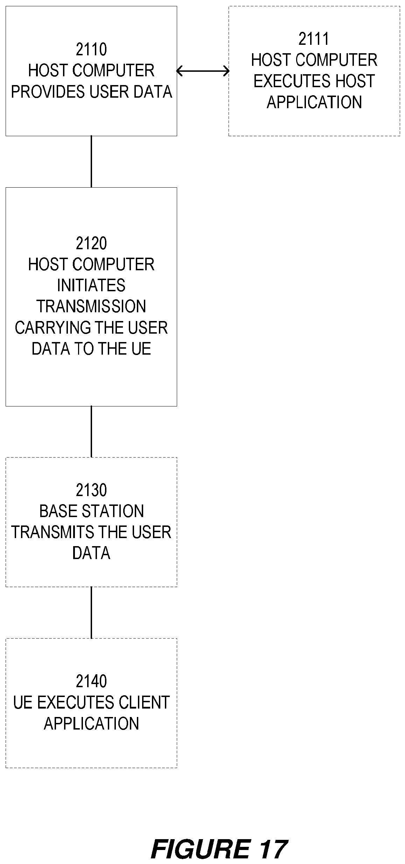

Figure 17 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 17 will be included in this section. In step 2110, the host computer provides user data. In substep 2111 (which may be optional) of step 2110, the host computer provides the user data by executing a host application. In step 2120, the host computer initiates a transmission carrying the user data to the UE. In step 2130 (which may be optional), the base station transmits to the UE the user data which was carried in the transmission that the host computer initiated, in accordance with the teachings of the embodiments described throughout this disclosure. In step 2140 (which may also be optional), the UE executes a client application associated with the host application executed by the host computer.

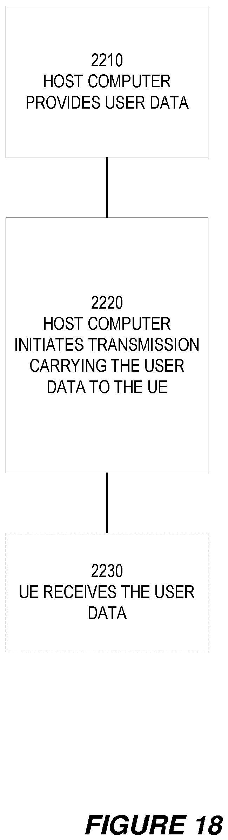

Figure 18 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 18 will be included in this section. In step 2210 of the method, the host computer provides user data. In an optional substep (not shown) the host computer provides the user data by executing a host application. In step 2220, the host computer initiates a transmission carrying the user data to the UE. The transmission may pass via the base station, in accordance with the teachings of the embodiments described throughout this disclosure. In step 2230 (which may be optional), the UE receives the user data carried in the transmission.

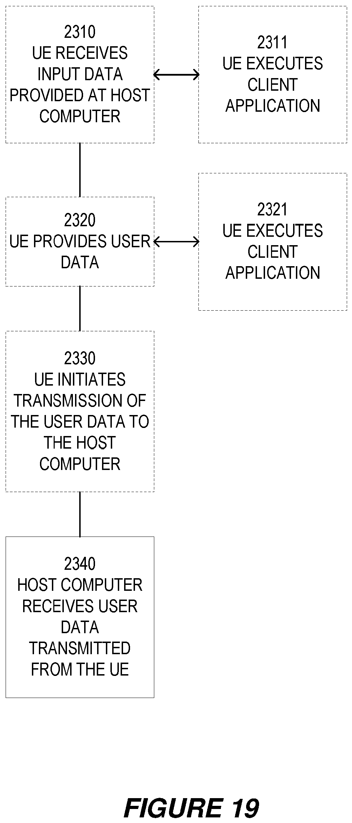

Figure 19 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 19 will be included in this section. In step 2310 (which may be optional), the UE receives input data provided by the host computer. Additionally or alternatively, in step 2320, the UE provides user data. In substep 2321 (which may be optional) of step 2320, the UE provides the user data by executing a client application. In substep 2311 (which may be optional) of step 2310, the UE executes a client application which provides the user data in reaction to the received input data provided by the host computer. In providing the user data, the executed client application may further consider user input received from the user. Regardless of the specific manner in which the user data was provided, the UE initiates, in substep 2330 (which may be optional), transmission of the user data to the host computer. In step 2340 of the method, the host computer receives the user data transmitted from the UE, in accordance with the teachings of the embodiments described throughout this disclosure.

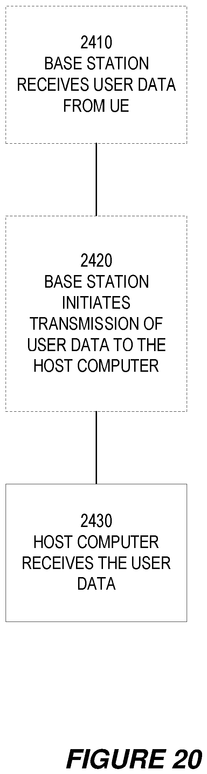

Figure 20 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 20 will be included in this section. In step 2410 (which may be optional), in accordance with the teachings of the embodiments described throughout this disclosure, the base station receives user data from the UE. In step 2420 (which may be optional), the base station initiates transmission of the received user data to the host computer. In step 2430 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

The present invention may, of course, be carried out in other ways than those specifically set forth herein without departing from essential characteristics of the invention. The present embodiments are to be considered in all respects as illustrative and not restrictive, and all changes coming within the meaning of the appended claims are intended to be embraced therein.

## Claims

1. A method of implementing packet duplication by a network node (500, 600) comprising a control plane circuit (610), a user plane circuit (620), and at least one distribution unit circuit (630), said control plane circuit (610) operatively connected to the at least one distribution unit circuit (630) via a control plane interface and said control plane circuit (610) operatively connected to the user plane circuit (620) via a control unit interface, said network node (500, 600) operative to communicate with a wireless device (10), the method implemented by the user plane circuit (620) and comprising:
receiving (300) a duplication signal from the control plane circuit (610) via the control unit interface; and
configuring (310) the user plane circuit (620) for packet duplication per data radio bearer responsive to the received duplication signal by configuring separate first and second bearer tunnels between the user plane circuit (620) and the at least one distribution unit circuit (630) responsive to the received duplication signal.

2. The method of claim 1 further comprising receiving, from the control plane circuit (610), an uplink tunnel identifier for each of the first and second bearer tunnels, said uplink tunnel identifiers allocated by the control plane circuit (610) for the packet duplication.

3. The method of claim 1 wherein the duplication signal includes an uplink tunnel identifier for each of the first and second bearer tunnels, said uplink tunnel identifiers allocated by the control plane circuit (610) for the packet duplication.

4. The method of claim 1 further comprising allocating, responsive to the received duplication signal, an uplink tunnel identifier for each of the first and second bearer tunnels.

5. The method of any one of claims 1-4 further comprising:
receiving, from the control plane circuit (610), an assignment of the first bearer tunnel to a first data radio bearer, and an assignment of the second bearer tunnel to a second data radio bearer;
wherein the first and second data radio bearers are configured to transport the same packet content.

6. The method of any one of claims 1-5 wherein the at least one distribution unit circuit (630) comprises two distribution unit circuits (630), both of the two distribution unit circuits (630) communicatively coupled to the wireless device (10), and wherein configuring the first and second bearer tunnels comprises:
configuring the first bearer tunnel between the user plane circuit (620) and one of the two distribution unit circuits (630); and
configuring the second bearer tunnel between the user plane circuit (620) and the other one of the two distribution unit circuits (630).

7. The method of any one of claims 1-6 further comprising receiving a timing notification from the control plane circuit (610) via the control unit interface, said timing notification identifying at least one of a start time and a stop time for the packet duplication.

8. A network node (500, 600) operative to communicate with a wireless device (10), the network node (500, 600) comprising:
at least one distribution unit circuit (630);
a control plane circuit (610) operatively connected to the at least one distribution unit circuit (630) via a control plane interface;
a user plane circuit (620) operatively connected to the control plane circuit (610) via a control unit interface; and
wherein the network node (500, 600) comprises processing circuitry (510) operative to implement the method of any one of claims 1-7.

9. A computer program product for controlling a network node (500, 600), the computer-program product comprising software instructions which, when run on at least one processing circuit (510) in the network node (500, 600), causes the network node (500, 600) to execute the method according to any one of claims 1-7.

10. A computer-readable medium comprising the computer program product of claim 9.

11. The computer-readable medium of claim 10 wherein the computer-readable medium comprises a non-transitory computer-readable medium.

12. A method of implementing packet duplication by a network node (500, 600) comprising a control plane circuit (610), a user plane circuit (620), and at least one distribution unit circuit (630), said control plane circuit (610) operatively connected to the at least one distribution unit circuit (630) via a control plane interface and said control plane circuit (610) operatively connected to the user plane circuit (620) via a control unit interface, said network node (500, 600) operative to communicate with a wireless device (10), the method implemented by the control plane circuit (610) and comprising:
sending (200) a duplication signal to the user plane circuit (620) via the control unit interface, said duplication signal indicating packet duplication per data radio bearer; and
determining (210), for the packet duplication, one or more tunnel identifiers for each of separate first and second bearer tunnels to be configured between the user plane circuit (620) and the at least one distribution unit circuit (630).

13. The method of claim 12 wherein determining the one or more tunnel identifiers comprises:
allocating an uplink tunnel identifier for each of the first and second bearer tunnels; and
sending the allocated uplink tunnel identifiers to the user plane circuit (620) via the control unit interface.

14. The method of claim 12 wherein sending the duplication signal comprises allocating an uplink tunnel identifier for each of the first and second bearer tunnels, wherein the duplication signal includes the allocated uplink tunnel identifiers.

15. The method of claim 12 wherein determining the one or more tunnel identifiers comprises receiving, via the control unit interface, an uplink tunnel identifier allocated by the user plane circuit (620) for each of the first and second bearer tunnels.

16. The method of claim 15 wherein determining the one or more tunnel identifiers comprises receiving, via the control plane interface, a downlink tunnel identifier allocated by the at least one distribution unit circuit (630) for each of the first and second bearer tunnels.

17. The method of claim 16 further comprising assigning the first bearer tunnel to a first radio bearer and assigning the second bearer tunnel to a second radio bearer, wherein the first and second radio bearers are both configured to transport packet content of the data radio bearer.

18. The method of any one of claims 12-17 further comprising sending the one or more tunnel identifiers to the at least one distribution unit circuit (630) via the control plane interface.

19. The method of any one of claims 12-18 wherein the at least one distribution unit circuit (630) comprises two distribution unit circuits (630), both of the two distribution unit circuits (630) communicatively coupled to the wireless device (10), and wherein determining the one or more tunnel identifiers comprises determining:
one or more tunnel identifiers for the first bearer tunnel between the user plane circuit (620) and one of the two distribution unit circuits (630); and
one or more tunnel identifiers for the second bearer tunnel between the user plane circuit (620) and the other one of the two distribution unit circuits (630).

20. The method of any one of claims 12-19 further comprising sending a timing notification to the user plane circuit (620) via the control unit interface, said timing notification identifying at least one of a start time and a stop time for the packet duplication.

21. The method of any one of claims 12-20 further comprising generating the duplication signal responsive to identifying a need for the packet duplication in view of a resiliency requirement and/or a latency requirement.

22. A network node (500, 600) operative to communicate with a wireless device, the network node (500, 600) comprising:
at least one distribution unit circuit (630);
a control plane circuit (610) operatively connected to the at least one distribution unit circuit (630) via a control plane interface;
a user plane (620) circuit operatively connected to the control plane circuit (610) via a control unit interface; and
wherein the network node (500, 600) comprises processing circuitry (510) operative to implement the method of any one of claims 12-21.

23. A computer program product for controlling a network node (500, 600), the computer-program product comprising software instructions which, when run on at least one processing circuit (510) in the network node (500, 600), causes the network node (500, 600) to execute the method according to any one of claims 12-21.

24. A computer-readable medium comprising the computer program product of claim 23.

25. The computer-readable medium of claim 24 wherein the computer-readable medium comprises a non-transitory computer-readable medium.

## Patentansprüche

1. Verfahren zur Implementierung von Paketduplizierung durch einen Netzwerkknoten (500, 600), der eine Steuerebenen-Schaltung (610), eine Benutzerebenen-Schaltung (620), und mindestens eine Verteilungseinheitsschaltung (630) umfasst, wobei die Steuerebenen-Schaltung (610) mit der mindestens einen Verteilungseinheitsschaltung (630) über eine Steuerebenen-Schnittstelle funktionell verbunden ist, und die Steuerebenen-Schaltung (610) mit der Benutzerebenen-Schaltung (620) über eine Steuereinheitsschnittstelle funktionell verbunden ist, wobei der Netzwerkknoten (500, 600) zum Kommunizieren mit einer drahtlosen Vorrichtung (10) ausgelegt ist, und das Verfahren von der Benutzerebenen-Schaltung (620) implementiert wird und **gekennzeichnet ist durch**:
Empfangen (300) eines Duplizierungssignals von der Steuerebenen-Schaltung (610) über die Steuereinheitsschnittstelle; und
Konfigurieren (310) der Benutzerebenen-Schaltung (620) zur Paketduplizierung pro Datenfunkträger in Reaktion auf das empfangene Duplizierungssignal **durch** Konfigurieren von separaten ersten und zweiten Trägertunneln zwischen der Benutzerebenen-Schaltung (620) und der mindestens einen Verteilungseinheitsschaltung (630) in Reaktion auf das empfangene Duplizierungssignal.

2. Verfahren nach Anspruch 1, ferner umfassend ein Empfangen einer Uplink-Tunnelkennung für jeden des ersten und des zweiten Trägertunnels von der Steuerebenen-Schaltung (610), wobei die Uplink-Tunnelkennungen von der Steuerebenen-Schaltung (610) für die Paketduplizierung zugewiesen werden.

3. Verfahren nach Anspruch 1, wobei das Duplizierungssignal eine Uplink-Tunnelkennung für jeden des ersten und des zweiten Trägertunnels umfasst, wobei die Uplink-Tunnelkennungen von der Steuerebenen-Schaltung (610) für die Paketduplizierung zugewiesen werden.

4. Verfahren nach Anspruch 1, ferner umfassend ein Zuweisen einer Uplink-Tunnelkennung für jeden des ersten und des zweiten Trägertunnels in Reaktion auf das empfangene Duplizierungssignal.

5. Verfahren nach einem der Ansprüche 1 bis 4, ferner umfassend:
Empfangen einer Zuordnung des ersten Trägertunnels zu einem ersten Datenfunkträger und einer Zuordnung des zweiten Trägertunnels zu einem zweiten Datenfunkträger von der Steuerebenen-Schaltung (610);
wobei der erste und der zweite Datenfunkträger zum Transportieren desselben Paketinhalts konfiguriert sind.

6. Verfahren nach einem der Ansprüche 1 bis 5, wobei die mindestens eine Verteilungseinheitsschaltung (630) zwei Verteilungseinheitsschaltungen (630) umfasst, wobei beide der zwei Verteilungseinheitsschaltungen (630) mit der drahtlosen Vorrichtung (10) kommunikativ gekoppelt sind, und wobei das Konfigurieren des ersten und des zweiten Trägertunnels umfasst:
Konfigurieren des ersten Trägertunnels zwischen der Benutzerebenen-Schaltung (620) und einer der beiden Verteilungseinheitsschaltungen (630);
Konfigurieren des zweiten Trägertunnels zwischen der Benutzerebenen-Schaltung (620) und der anderen der beiden Verteilungseinheitsschaltungen (630).

7. Verfahren nach einem der Ansprüche 1 bis 6, ferner umfassend ein Empfangen einer Zeitvorgabemeldung von der Steuerebenen-Schaltung (610) über die Steuereinheitsschnittstelle, wobei die Zeitvorgabemeldung mindestens eine von einer Startzeit und einer Stoppzeit für die Paketduplizierung identifiziert.

8. Netzwerkknoten (500, 600), der zum Kommunizieren mit einer drahtlosen Vorrichtung (10) ausgelegt ist, wobei der Netzwerkknoten (500, 600) umfasst:
mindestens eine Verteilungseinheitsschaltung (630);
eine Steuerebenen-Schaltung (610), die mit der mindestens einen Verteilungseinheitsschaltung (630) über eine Steuerebenen-Schnittstelle funktionell verbunden ist;
eine Benutzerebenen-Schaltung (620), die mit der Steuerebenen-Schaltung (610) über ein Steuereinheitsschnittstelle funktionell verbunden ist; und
wobei der Netzwerkknoten (500, 600) eine Verarbeitungsschaltungsanordnung (510) umfasst, die zum Implementieren des Verfahrens nach einem der Ansprüche 1 bis 7 ausgelegt ist.

9. Computerprogrammprodukt zum Steuern eines Netzwerkknotens (500, 600), wobei das Computerprogrammprodukt Softwareanweisungen umfasst, die bei Ausführung auf mindestens einer Verarbeitungsschaltung (510) im Netzwerkknoten (500, 600) den Netzwerkknoten (500, 600) zum Ausführen des Verfahrens nach einem der Ansprüche 1 bis 7 veranlassen.

10. Computerlesbares Medium, umfassend das Computerprogrammprodukt nach 9.

11. Computerlesbares Medium nach Anspruch 10, wobei das computerlesbare Medium ein nicht-transitorisches computerlesbares Medium umfasst.

12. Verfahren zur Implementierung von Paketduplizierung durch einen Netzwerkknoten (500, 600), der eine Steuerebenen-Schaltung (610), eine Benutzerebenen-Schaltung (620), und mindestens eine Verteilungseinheitsschaltung (630) umfasst, wobei die Steuerebenen-Schaltung (610) mit der mindestens einen Verteilungseinheitsschaltung (630) über eine Steuerebenen-Schnittstelle funktionell verbunden ist, und die Steuerebenen-Schaltung (610) mit der Benutzerebenen-Schaltung (620) über eine Steuereinheitsschnittstelle funktionell verbunden ist, wobei der Netzwerkknoten (500, 600) zum Kommunizieren mit einer drahtlosen Vorrichtung (10) ausgelegt ist, und das Verfahren von der Steuerebenen-Schaltung (610) implementiert wird und **gekennzeichnet ist durch**:
Senden (200) eines Duplizierungssignals (620) über die Steuereinheitsschnittstelle an die Benutzerebenen-Schaltung (620), wobei das Duplizierungssignal Paketduplizierung pro Datenfunkträger anzeigt; und
Bestimmen (210) für die Paketduplizierung einer oder mehrerer Tunnelkennungen für jeden von separaten ersten und zweiten Trägertunneln, die zwischen der Benutzerebenen-Schaltung (620) und der mindestens einen Verteilungseinheitsschaltung (630) konfiguriert werden sollen.

13. Verfahren nach Anspruch 12 wobei das Bestimmen der einen oder der mehreren Tunnelkennungen umfassen:
Zuweisen einer Uplink-Tunnelkennung für jeden des ersten und des zweiten Trägertunnels; und
Senden der zugewiesenen Uplink-Tunnelkennungen über die Steuereinheitsschnittstelle an die Benutzerebenen-Schaltung (620).

14. Verfahren nach Anspruch 12, wobei das Senden des Duplizierungssignals ein Zuweisen einer Uplink-Tunnelkennung für jeden des ersten und des zweiten Trägertunnels umfasst, wobei das Duplizierungssignal die zugewiesenen Uplink-Tunnelkennungen umfasst.

15. Verfahren nach Anspruch 12, wobei das Bestimmen der einen oder der mehreren Tunnelkennungen ein Empfangen einer Uplink-Tunnelkennung, die von der Benutzerebenen-Schaltung (620) für jeden des ersten und des zweiten Trägertunnels zugewiesen wird, über die Steuereinheitsschnittstelle umfasst.

16. Verfahren nach Anspruch 15, wobei das Bestimmen der einen oder der mehreren Tunnelkennungen ein Empfangen einer Downlink-Tunnelkennung, die von der mindestens einen Verteilungseinheitsschaltung (630) für jeden des ersten und des zweiten Trägertunnels zugewiesen wird, über die Steuerebenen-Schnittstelle umfasst.

17. Verfahren nach Anspruch 16, ferner umfassend ein Zuordnen des ersten Trägertunnels zu einem ersten Funkträger und Zuordnen des zweiten Trägertunnels zu einem zweiten Funkträger, wobei der erste und der zweite Funkträger beide zum Transportieren von Paketinhalt des Datenfunkträgers konfiguriert sind.

18. Verfahren nach einem der Ansprüche 12 bis 17, ferner umfassend ein Senden der einen oder der mehreren Tunnelkennungen über die Steuerebenen-Schnittstelle an die mindestens eine Verteilungseinheitsschaltung (630) .

19. Verfahren nach einem der Ansprüche 12 bis 18, wobei die mindestens eine Verteilungseinheitsschaltung (630) zwei Verteilungseinheitsschaltungen (630) umfasst, wobei beide der zwei Verteilungseinheitsschaltungen (630) mit der drahtlosen Vorrichtung (10) kommunikativ gekoppelt sind, und wobei das Bestimmen der oder der mehreren Tunnelkennungen ein Bestimmen umfasst von:
einer oder mehreren Tunnelkennungen für den ersten Trägertunnel zwischen der Benutzerebenen-Schaltung (620) und einer der beiden Verteilungseinheitsschaltungen (630); und
einer oder mehreren Tunnelkennungen für den zweiten Trägertunnel zwischen der Benutzerebenen-Schaltung (620) und der anderen der beiden Verteilungseinheitsschaltungen (630).

20. Verfahren nach einem der Ansprüche 12 bis 19, ferner umfassend ein Senden einer Zeitvorgabemeldung über die Steuereinheitsschnittstelle an die Benutzerebenen-Schaltung (620), wobei die Zeitvorgabemeldung mindestens eine von einer Startzeit und einer Stoppzeit für die Paketduplizierung identifiziert.

21. Verfahren nach einem der Ansprüche 12 bis 20, ferner umfassend ein Erzeugen des Duplizierungssignals in Reaktion auf ein Identifizieren einer Notwendigkeit für die Paketduplizierung in Anbetracht einer Resilienzanforderung und/oder einer Latenzanforderung.

22. Netzwerkknoten (500, 600), der zum Kommunizieren mit einer drahtlosen Vorrichtung ausgelegt ist, wobei der Netzwerkknoten (500, 600) umfasst:
mindestens eine Verteilungseinheitsschaltung (630);
eine Steuerebenen-Schaltung (610), die mit der mindestens einen Verteilungseinheitsschaltung (630) über eine Steuerebenen-Schnittstelle funktionell verbunden ist;
eine Benutzerebenen-Schaltung (620), die mit der Steuerebenen-Schaltung (610) über eine Steuereinheitsschnittstelle funktionell verbunden ist; und
wobei der Netzwerkknoten (500, 600) eine Verarbeitungsschaltungsanordnung (510) umfasst, die zum Implementieren des Verfahrens nach einem der Ansprüche 12 bis 21 ausgelegt ist.

23. Computerprogrammprodukt zum Steuern eines Netzwerkknotens (500, 600), wobei das Computerprogrammprodukt Softwareanweisungen umfasst, die bei Ausführung auf mindestens einer Verarbeitungsschaltung (510) im Netzwerkknoten (500, 600) den Netzwerkknoten (500, 600) zum Ausführen des Verfahrens nach einem der Ansprüche 12 bis 21 veranlassen.

24. Computerlesbares Medium, umfassend das Computerprogrammprodukt nach 23.

25. Computerlesbares Medium nach Anspruch 24, wobei das computerlesbare Medium ein nicht-transitorisches computerlesbares Medium umfasst.

## Revendications

1. Procédé de mise en œuvre d'une duplication de paquets par un nœud de réseau (500, 600) comprenant un circuit de plan de commande (610), un circuit de plan d'utilisateur (620), et au moins un circuit d'unité de distribution (630), ledit circuit de plan de commande (610) étant connecté opérationnellement à l'au moins un circuit d'unité de distribution (630) via une interface de plan de commande et ledit circuit de plan de commande (610) étant connecté opérationnellement au circuit de plan d'utilisateur (620) via une interface d'unité de commande, ledit nœud de réseau (500, 600) étant opérationnel pour communiquer avec un dispositif sans fil (10), le procédé étant mis en œuvre par le circuit de plan d'utilisateur (620) et **caractérisé par** :
la réception (300) d'un signal de duplication depuis le circuit de plan de commande (610) via l'interface d'unité de commande ; et
la configuration (310) du circuit de plan d'utilisateur (620) pour une duplication de paquets par support radio de données en réponse au signal de duplication reçu par la configuration des premier et deuxième tunnels de support distincts entre le circuit de plan d'utilisateur (620) et l'au moins un circuit d'unité de distribution (630) en réponse au signal de duplication reçu.

2. Procédé selon la revendication 1, comprenant en outre la réception, depuis le circuit de plan de commande (610), d'un identifiant de tunnel de liaison montante pour chacun des premier et deuxième tunnels de support, lesdits identifiants de tunnel de liaison montante étant alloués par le circuit de plan de commande (610) pour la duplication de paquets.

3. Procédé selon la revendication 1, dans lequel le signal de duplication inclut un identifiant de tunnel de liaison montante pour chacun des premier et deuxième tunnels de support, lesdits identifiants de tunnel de liaison montante étant alloués par le circuit de plan de commande (610) pour la duplication de paquets.

4. Procédé selon la revendication 1, comprenant en outre l'allocation, en réponse au signal de duplication reçu, d'un identifiant de tunnel de liaison montante pour chacun des premier et deuxième tunnels de support.

5. Procédé selon l'une quelconque des revendications 1 à 4, comprenant en outre :
la réception, depuis le circuit de plan de commande (610), d'une assignation du premier tunnel de support à un premier support radio de données, et d'une assignation du deuxième tunnel de support à un deuxième support radio de données ;
dans lequel les premier et deuxième supports radio de données sont configurés pour transporter le même contenu de paquets.

6. Procédé selon l'une quelconque des revendications 1 à 5, dans lequel l'au moins un circuit d'unité de distribution (630) comprend deux circuits d'unité de distribution (630), les deux circuits d'unité de distribution (630) étant couplés, de manière à pouvoir communiquer, au dispositif sans fil (10), et dans lequel la configuration des premier et deuxième tunnels de support comprend :
la configuration du premier tunnel de support entre le circuit de plan d'utilisateur (620) et l'un des deux circuits d'unité de distribution (630) ; et
la configuration du deuxième tunnel de support entre le circuit de plan d'utilisateur (620) et l'autre des deux circuits d'unité de distribution (630).

7. Procédé selon l'une quelconque des revendications 1 à 6, comprenant en outre la réception d'une notification de timing depuis le circuit de plan de commande (610) via l'interface d'unité de commande, ladite notification de timing identifiant au moins l'un d'un temps de démarrage et d'un temps d'arrêt pour la duplication de paquets.

8. Nœud de réseau (500, 600) opérationnel pour communiquer avec un dispositif sans fil (10), le nœud de réseau (500, 600) comprenant :
au moins un circuit d'unité de distribution (630) ;
un circuit de plan de commande (610) connecté opérationnellement à l'au moins un circuit d'unité de distribution (630) via une interface de plan de commande ;
un circuit de plan d'utilisateur (620) connecté opérationnellement au circuit de plan de commande (610) via une interface d'unité de commande ; et
dans lequel le nœud de réseau (500, 600) comprend une circuiterie de traitement (510) opérationnelle pour mettre en œuvre le procédé selon l'une quelconque des revendications 1 à 7.

9. Produit de programme d'ordinateur pour commander un nœud de réseau (500, 600), le produit de programme d'ordinateur comprenant des instructions logicielles qui, lorsqu'elles sont exécutées sur au moins un circuit de traitement (510) dans le nœud de réseau (500, 600), amènent le nœud de réseau (500, 600) à exécuter le procédé selon l'une quelconque des revendications 1 à 7.

10. Support lisible par ordinateur comprenant le produit de programme d'ordinateur selon la revendication 9.

11. Support lisible par ordinateur selon la revendication 10, dans lequel le support lisible par ordinateur comprend un support lisible par ordinateur non transitoire.

12. Procédé de mise en œuvre d'une duplication de paquets par un nœud de réseau (500, 600) comprenant un circuit de plan de commande (610), un circuit de plan d'utilisateur (620), et au moins un circuit d'unité de distribution (630), ledit circuit de plan de commande (610) étant connecté opérationnellement à l'au moins un circuit d'unité de distribution (630) via une interface de plan de commande et ledit circuit de plan de commande (610) étant connecté opérationnellement au circuit de plan d'utilisateur (620) via une interface d'unité de commande, ledit nœud de réseau (500, 600) étant opérationnel pour communiquer avec un dispositif sans fil (10), le procédé étant mis en œuvre par le circuit de plan de commande (610) et **caractérisé par** :
l'envoi (200) d'un signal de duplication au circuit de plan d'utilisateur (620) via l'interface d'unité de commande, ledit signal de duplication indiquant une duplication de paquets par support radio de données ; et
la détermination (210), pour la duplication de paquets, d'un ou plusieurs identifiants de tunnel pour chacun des premier et deuxième tunnels de support distincts à configurer entre le circuit de plan d'utilisateur (620) et l'au moins un circuit d'unité de distribution (630).

13. Procédé selon la revendication 12, dans lequel la détermination des un ou plusieurs identifiants de tunnel comprend :
l'allocation d'un identifiant de tunnel de liaison montante pour chacun des premier et deuxième tunnels de support ; et
l'envoi des identifiants de tunnel de liaison montante alloués au circuit de plan d'utilisateur (620) via l'interface d'unité de commande.

14. Procédé selon la revendication 12, dans lequel l'envoi du signal de duplication comprend l'allocation d'un identifiant de tunnel de liaison montante pour chacun des premier et deuxième tunnels de support, dans lequel le signal de duplication inclut les identifiants de tunnel de liaison montant alloués.

15. Procédé selon la revendication 12, dans lequel la détermination des un ou plusieurs identifiants de tunnel comprend la réception, via l'interface d'unité de commande, d'un identifiant de tunnel de liaison montante alloué par le circuit de plan d'utilisateur (620) pour chacun des premier et deuxième tunnels de support.

16. Procédé selon la revendication 15, dans lequel la détermination des un ou plusieurs identifiants de tunnel comprend la réception, via l'interface de plan de commande, d'un identifiant de tunnel de liaison descendante alloué par l'au moins un circuit d'unité de distribution (630) pour chacun des premier et deuxième tunnels de support.

17. Procédé selon la revendication 16, comprenant en outre l'assignation du premier tunnel de support à un premier support radio et l'assignation du deuxième tunnel de support à un deuxième support radio, dans lequel les premier et deuxième supports radio sont tous les deux configurés pour transporter un contenu de paquets du support radio de données.

18. Procédé selon l'une quelconque des revendications 12 à 17, comprenant en outre l'envoi des un ou plusieurs identifiants de tunnel à l'au moins un circuit d'unité de distribution (630) via l'interface de plan de commande.

19. Procédé selon l'une quelconque des revendications 12 à 18, dans lequel l'au moins un circuit d'unité de distribution (630) comprend deux circuits d'unité de distribution (630), les deux circuits d'unité de distribution (630) étant couplés, de manière à pouvoir communiquer, au dispositif sans fil (10), et dans lequel la détermination des un ou plusieurs identifiants de tunnel comprend la détermination de :
un ou plusieurs identifiants de tunnel pour le premier tunnel de support entre le circuit de plan d'utilisateur (620) et l'un des deux circuits d'unité de distribution (630) ; et
un ou plusieurs identifiants de tunnel pour le deuxième tunnel de support entre le circuit de plan d'utilisateur (620) et l'autre des deux circuits d'unité de distribution (630).

20. Procédé selon l'une quelconque des revendications 12 à 19, comprenant en outre l'envoi d'une notification de timing au circuit de plan d'utilisateur (620) via l'interface d'unité de commande, ladite notification de timing identifiant au moins l'un parmi un temps de démarrage et un temps d'arrêt pour la duplication de paquets.

21. Procédé selon l'une quelconque des revendications 12 à 20, comprenant en outre la génération du signal de duplication en réponse à l'identification d'un besoin pour la duplication de paquets compte tenu d'une exigence de résilience et/ou d'une exigence de latence.

22. Nœud de réseau (500, 600) opérationnel pour communiquer avec un dispositif sans fil, le nœud de réseau (500, 600) comprenant :
au moins un circuit d'unité de distribution (630) ;
un circuit de plan de commande (610) connecté opérationnellement à l'au moins un circuit d'unité de distribution (630) via une interface de plan de commande ;
un circuit de plan d'utilisateur (620) connecté opérationnellement au circuit de plan de commande (610) via une interface d'unité de commande ; et
dans lequel le nœud de réseau (500, 600) comprend une circuiterie de traitement (510) opérationnelle pour mettre en œuvre le procédé selon l'une quelconque des revendications 12 à 21.

23. Produit de programme d'ordinateur pour commander un nœud de réseau (500, 600), le produit de programme d'ordinateur comprenant des instructions logicielles qui, lorsqu'elles sont exécutées sur au moins un circuit de traitement (510) dans le nœud de réseau (500, 600), amènent le nœud de réseau (500, 600) à exécuter le procédé selon l'une quelconque des revendications 12 à 21.

24. Support lisible par ordinateur comprenant le produit de programme d'ordinateur selon la revendication 23.

25. Support lisible par ordinateur selon la revendication 24, dans lequel le support lisible par ordinateur comprend un support lisible par ordinateur non transitoire.
